# EUROPEAN PATENT APPLICATION

(11) **EP 4 120 647 A1**
(43) Date of publication of application: **18.01.2023**
(21) Application number: 20931218.0
(22) Date of filing: 14.04.2020
(51) Int. Cl.: H04L 29/06

(54) **PACKET TRANSMISSION METHOD, DEVICE, AND SYSTEM**

(71) Applicant: Huawei Cloud Computing Technologies Co., Ltd., Guizhou 550025 (CN)
(72) Inventor: ZHANG, Yu, Shenzhen, Guangdong 518129 (CN); WANG, Xuefeng, Shenzhen, Guangdong 518129 (CN)
(74) Representative: MERH-IP Matias Erny Reichl Hoffmann Patentanwälte PartG mbB
(86) International application number: PCT/CN2020/084669
(87) International publication number: WO 2021/207922

(57) **Abstract**

This application discloses a packet transmission method, apparatus, and system, applied to the communications field. The method includes: A host obtains a packet; and when a transmission path of the packet needs to pass through a wide area network, the host determines whether to perform optimization on the packet for transmission in the wide area network, or the host performs optimization on the packet for transmission in the wide area network. This application can resolve problems that a procedure for processing a packet by a CPE is complex and calculation overheads are high. This application is used for packet transmission between an edge site and a data center.

## Description

### TECHNICAL FIELD

This application relates to the field of communications technologies, and in particular, to a packet transmission method, apparatus, and system.

### BACKGROUND

In recent years, cloud computing technologies have been popularized, and more cloud computing vendors have launched cloud computing services. The cloud computing services provided by the cloud computing vendors include a central cloud service deployed in a data center (also referred to as a central site) and an edge cloud service deployed in an edge site. A connection between the edge site and the central site needs to cross a wide area network (Wide Area Network, WAN).

To improve quality of communication between the edge site and the central site, a software-defined wide area network (Software Defined WAN, SD-WAN) is currently proposed. The SD-WAN is a service formed by applying a software-defined networking (Software Defined Network, SDN) technology to a wide area network scenario. This service can help users reduce wide area network costs and improve network connection flexibility.

Currently, a cloud computing service system to which the SD-WAN is applied includes: an SD-WAN controller, a network controller (also referred to as a site controller) disposed inside each of the central site and the edge site, and a customer premise equipment (Customer Premise Equipment, CPE) disposed inside each of the central site and the edge site. The SD-WAN controller is configured to control a CPE deployed in each site, and the network controller is configured to control a device at a corresponding site. Wide area network transmission optimization (also referred to as wide area network transmission optimization) of a packet between the edge site and the central site may be implemented through control of the SD-WAN controller and a network controller of each site.

In the cloud computing service system to which the SD-WAN is applied, a user needs to identify a service scenario and a transmission path of a service packet. If the packet needs to be transmitted across a wide area network, the user can log in to a network operation platform corresponding to the SD-WAN controller, apply for and create a communication link across the wide area network, and configure related tunnel configuration information. The SD-WAN controller delivers the tunnel configuration information to the CPEs disposed inside the data center and the edge site, so that the CPEs at the two sites can establish the communication link. The user also needs to log in to cloud operating system platforms of the network controller of the edge site and the network controller of the edge site, to configure internal service network information of the corresponding sites.

After the foregoing configuration process is completed, in a site, based on internal service network information of the site, a packet (also referred to as a data packet) generated by a virtual machine in a host passes through a virtual switch (vSwitch) in the host, and is sent by the virtual switch to a gateway in the host. The gateway sends the packet to a CPE. The CPE obtains application information of the packet, compares the application information with information in a built-in application library (also referred to as a service library or a service library), and optimizes a matched packet in the wide area network. The finally processed packet is sent from the CPE of the site to a CPE of a peer site by using the foregoing communication link, and the CPE of the peer site performs related processing and then transmits the processed packet to a destination host.

However, in the foregoing packet transmission process, the CPE needs to determine whether to perform optimization on the packet in the wide area network. As a result, a packet processing procedure of the CPE is complex, and calculation overheads are relatively high.

### SUMMARY

Embodiments of this application provide a packet transmission method, apparatus, and system. This solution includes the following steps.

According to a first aspect, this application provides a packet transmission method, where the method includes:

A host obtains a packet; and when a transmission path of the packet needs to pass through a wide area network, the host determines whether to perform optimization on the packet for transmission in the wide area network, or the host performs optimization on the packet for transmission in the wide area network. For example, the packet may be generated by a virtual machine or a container of the host.

According to the packet transmission method provided in this embodiment of this application, when the transmission path of the packet needs to pass through the wide area network, the host determines whether to perform optimization on a packet 1 in the wide area network. The CPE does not need to determine whether to perform optimization on the packet in wide area network, thereby simplifying a process of processing the packet by the CPE, and reducing calculation overheads of the CPE.

Optionally, a process in which the host determines whether to perform optimization on the packet for transmission in the wide area network includes: The host determines, based on a target parameter, whether to perform optimization on the packet for transmission in the wide area network. The optimization performed in the wide area network is one or more types of processing for performing transmission optimization on the packet whose transmission path passes through the wide area network. For example, the optimization includes at least one of a deep packet inspection (Deep packet inspection, DPI) application identification (also referred to as DPI detection) operation, an application scheduling operation, an application routing operation, an application acceleration operation, a firewall operation, and a packet encryption operation.

Information about various operations included in the foregoing optimization may be manually preconfigured in the site, or information about various operations included in the optimization may be set in the site in a static configuration manner. For example, information about various operations included in the optimization is sent by a unified controller to the site in advance by using a configuration instruction, and is stored by the site. In this way, a network controller does not need to be separately disposed for the site, thereby reducing management costs of the site.

Optionally, the target parameter includes any one or any combination of the following:
a protocol used to transmit the packet; or a feature of the packet; or information in an application layer protocol field of the packet.

Optionally, the information in the application layer protocol field of the packet includes any one or any combination of the following: a source internet protocol IP address; or a source port; or a destination IP address; or a destination port; or a transport layer protocol.

Optionally, a process in which the host determines whether to perform optimization on the packet for transmission in the wide area network includes:

When a preset condition is met, the host determines to perform optimization on the packet for transmission in the wide area network; or when a preset condition is not met, the host determines not to perform optimization on the packet for transmission in the wide area network.

The preset condition includes any one or any combination of the following: the protocol used to transmit the packet belongs to a specified protocol set; or the feature of the packet conforms to a specified feature; or the information in the application layer protocol field of the packet belongs to a specified information set.

Optionally, that the host performs optimization on the packet for transmission in the wide area network includes: When an optimization condition is met, the host performs one or more of a DPI application identification operation, a firewall operation, an application scheduling operation, an application acceleration operation, and an application encryption operation on the packet; and/or when the optimization condition is met, the host selects a first link as a transmission link of the packet, or when the optimization condition is not met, the host selects a second link as a transmission link of the packet, where the first link is different from the second link.

The optimization condition includes any one or any combination of the following: The protocol used to transmit the packet belongs to a specified protocol set; or the feature of the packet conforms to a specified feature; or a service type corresponding to the packet belongs to a specified service type set; or the information in the application layer protocol field of the packet belongs to a specified information set.

Optionally, the method further includes: The host determines whether the transmission path of the packet passes through the wide area network.

Because the host can autonomously determine whether the transmission path of the packet passes through the wide area network, compared with that in a related technology, the network controller does not need to indicate the host in the site. Therefore, the network controller does not need to be disposed, thereby reducing network deployment costs of the SD-WAN.

Optionally, a process in which the host determines whether the transmission path of the packet passes through the wide area network includes: The host determines, based on a destination address of the packet, whether the transmission path of the packet passes through the wide area network. The destination address is an address of a destination host to which the packet is transmitted, and is used to identify a receiver of the packet. For example, the destination address includes a destination IP address or a destination MAC address.

Optionally, the host may determine, by detecting whether the destination address is the address of the host in the site, whether the transmission path of the packet passes through the wide area network. When the destination address is the address of the host in the site, the host determines that the transmission path of the packet does not pass through the wide area network; and when the destination address is not the address of the host in the site, determines that the transmission path of the packet passes through the wide area network. For example, the host may obtain in advance an address table that records an address (for example, an IP address or a MAC address) in the site, and detect, by querying the address table, whether the destination address is the address of the host in the site. If the destination address is recorded in the address table, the destination address is the address of the host in the site; or if the destination address is not recorded in the address table, the destination address is not the address of the host in the site. The address table may be delivered by the unified controller in advance, or may be set by an administrator, or may be delivered in real time by the unified controller when detecting that the host has an action of generating a packet.

Optionally, the method may further include: The host sends the optimized packet to the wide area network by using a gateway or a customer premise equipment of a site to which the host belongs; or the host sends the optimized packet to the wide area network by using a gateway of the host.

Optionally, a process in which the host determines whether to perform optimization on the packet for transmission in the wide area network may include:
querying, based on the target parameter of the packet, an operation table to obtain an operation corresponding to the target parameter, where the operation table is used to record operations respectively corresponding to a plurality of parameters, the operation is an operation of performing the optimization on the packet, and the plurality of parameters include the target parameter. In this way, an objective of determining and performing optimization can be achieved at the same time by directly looking up the table, thereby saving a processing procedure and improving processing efficiency.

According to a second aspect, a packet transmission method is provided, where the method includes:

A host receives a packet transmitted through a wide area network, where the packet is a packet optimized for transmission in the wide area network; and the host preprocesses the packet.

According to the packet transmission method provided in this embodiment of this application, at a receive end of the packet, after receiving the packet whose transmission path passes through the wide area network, the host preprocesses the packet. A CPE does not need to preprocess the packet, thereby simplifying a packet processing procedure of the CPE and reducing calculation overheads of the CPE. In this way, the CPE only needs to include a gateway or be replaced with a gateway, so that manufacturing is simple and costs are low, thereby effectively reducing manufacturing costs of a site.

Optionally, that the host preprocesses the packet includes: The host preprocesses the packet based on received indication information, where the indication information is sent by a source host of the packet to the host, and the indication information is used to indicate the optimization performed on the packet.

Optionally, an operation of preprocessing a same packet may be the same as or corresponding to an operation of optimization. The host may query the correspondence table based on the obtained indication information to obtain the preprocessing operation. For example, the correspondence table records a preprocessing operation corresponding to each of a plurality of operations for optimization. The host determines, based on the obtained indication information, the optimization operation performed on the packet, and queries the correspondence table by using the determined operation, to obtain the preprocessing operation.

Optionally, the indication information is forwarded by the source host of the packet to the host by using a unified controller.

The indication information is generated by the host that sends the packet, and does not need to be configured by a user, thereby effectively reducing user operation complexity and improving user experience.

Optionally, the preprocessing includes one or more of a firewall operation, an application scheduling operation, an application restoration operation, or an application decryption operation.

Because the host can independently preprocess the packet for transmission in the wide area network, compared with a related technology, the network controller does not need to indicate the host in the site. Therefore, the network controller does not need to be disposed, thereby further reducing network deployment costs of the SD-WAN.

According to a third aspect, this application provides a packet transmission apparatus. The packet transmission apparatus may include at least one module, and the at least one module may be configured to implement the packet transmission method provided in the first aspect or the possible implementations of the first aspect. The apparatus may be a virtual switch or a physical network interface card.

According to a fourth aspect, this application provides a packet transmission apparatus. The packet transmission apparatus may include at least one module, and the at least one module may be configured to implement the execution plan processing method provided in the second aspect or the possible implementations of the second aspect. The apparatus may be a virtual switch or a physical network interface card.

According to a fifth aspect, this application provides a computer device, where the computer device includes a processor and a memory. The memory stores computer instructions. The processor executes the computer instructions stored in the memory, so that the computer device performs the method provided in the first aspect or the possible implementations of the first aspect, and the computer device deploys the packet transmission apparatus provided in the third aspect or the possible implementations of the third aspect.

According to a sixth aspect, this application provides a computer device, where the computer device includes a processor and a memory. The memory stores computer instructions. The processor executes the computer instructions stored in the memory, so that the computer device performs the method provided in the second aspect or the possible implementations of the second aspect, and the computer device deploys the packet transmission apparatus provided in the fourth aspect or the possible implementations of the fourth aspect.

According to a seventh aspect, this application provides a computer-readable storage medium. The computer-readable storage medium stores computer instructions. The computer instructions instruct the computer device to perform the method provided in the first aspect or the possible implementations of the first aspect, or the computer instructions instruct the computer device to deploy the packet transmission apparatus provided in the third aspect or the possible implementations of the third aspect.

According to an eighth aspect, this application provides a computer-readable storage medium. The computer-readable storage medium stores computer instructions. The computer instructions instruct the computer device to perform the method provided in the second aspect or the possible implementations of the second aspect, or the computer instructions instruct the computer device to deploy the packet transmission apparatus provided in the fourth aspect or the possible implementations of the fourth aspect.

According to a ninth aspect, this application provides a computer program product. The computer program product includes computer instructions, and the computer instructions are stored in a computer-readable storage medium. A processor of a computer device may read the computer instructions from the computer-readable storage medium, and the processor executes the computer instructions, so that the computer device performs the method provided in the first aspect or the possible implementations of the first aspect, and the computer device deploys the packet transmission apparatus provided in the third aspect or the possible implementations of the third aspect.

According to a tenth aspect, this application provides a computer program product. The computer program product includes computer instructions, and the computer instructions are stored in a computer-readable storage medium. A processor of a computer device may read the computer instructions from the computer-readable storage medium, and the processor executes the computer instructions, so that the computer device performs the method provided in the second aspect or the possible implementations of the second aspect, and the computer device deploys the packet transmission apparatus provided in the fourth aspect or the possible implementations of the fourth aspect.

According to an eleventh aspect, a chip is provided. The chip may include a programmable logic circuit and/or program instructions. When running, the chip is configured to implement the packet transmission method according to any one of the first aspect.

According to a twelfth aspect, a chip is provided. The chip may include a programmable logic circuit and/or program instructions. When running, the chip is configured to implement the packet transmission method according to any one of the second aspect.

According to a thirteenth aspect, this application provides a network interface card, where the network interface card includes a processor and a memory. The memory stores computer instructions. The processor executes the computer instructions stored in the memory, so that the network interface card performs the method provided in the first aspect or the possible implementations of the first aspect, and the network interface card deploys the packet transmission apparatus provided in the third aspect or the possible implementations of the third aspect.

According to a fourteenth aspect, this application provides a network interface card, where the network interface card includes a processor and a memory. The memory stores computer instructions. The processor executes the computer instructions stored in the memory, so that the network interface card performs the method provided in the second aspect or the possible implementations of the second aspect, and the network interface card deploys the packet transmission apparatus provided in the fourth aspect or the possible implementations of the fourth aspect.

According to a fifteenth aspect, this application provides a packet transmission system, including at least two sites, where the sites include one or more hosts, and the hosts of the at least two sites include the packet transmission apparatus according to any one of the third aspect.

According to a sixteenth aspect, this application provides a packet transmission system, including at least two sites, where the sites include one or more hosts, and the hosts of the at least two sites include the packet transmission apparatus according to any one of the fourth aspect.

Optionally, the packet transmission system further includes a unified controller.

In conclusion, according to the packet transmission method provided in this embodiment of this application, at a transmit end of a packet, when a transmission path of the packet needs to pass through a wide area network, the host determines whether to perform optimization on the packet in the wide area network. However, the host determines optimization, and the CPE does not need to determine whether to perform optimization on the packet in the wide area network, thereby simplifying a process of processing the packet by the CPE, and reducing calculation overheads of the CPE.

In this way, the CPE only needs to include a gateway or be replaced with a gateway, so that manufacturing is simple and costs are low, thereby effectively reducing manufacturing costs of a site. Especially for a small-sized site, space occupation and server resource occupation may be reduced. Further optionally, a gateway function of the CPE may also be implemented by a gateway of at least one host in the site. In this way, the CPE may not be disposed any more, so as to reduce device costs. Especially for a small-sized site, space occupation and server resource occupation may be further reduced.

Further, because the host can autonomously determine whether the transmission path of the packet passes through the wide area network, and/or autonomously determine whether to perform optimization on the packet for transmission in the wide area network, compared with that in a related technology, a network controller does not need to indicate the host in the site. Therefore, the network controller does not need to be disposed, thereby further reducing network deployment costs of the SD-WAN.

Similarly, according to the packet transmission method provided in this embodiment of this application, at a receive end of the packet, after receiving the packet whose transmission path passes through the wide area network, the host preprocesses the packet. The CPE does not need to preprocess the packet, thereby simplifying a packet processing procedure of the CPE and reducing calculation overheads of the CPE. In this way, the CPE only needs to include a gateway or be replaced with a gateway, so that manufacturing is simple and costs are low, thereby effectively reducing manufacturing costs of a site.

Further, because the host can independently preprocess the packet for transmission in the wide area network, compared with a related technology, the network controller does not need to indicate the host in the site. Therefore, the network controller does not need to be disposed, thereby further reducing network deployment costs of the SD-WAN.

For a transmit end and the receive end of the packet, the foregoing packet transmission method is used to offload some functions (such as an optimization function or a preprocessing function) of the CPE to the host, for example, a virtual switch or a physical network interface card. For a site, the functions of the original CPE are distributed on each host. An overall structure of the site does not need to be reconstructed or slightly reconstructed. In this way, the entire SD-WAN does not need to be reconstructed or the SD-WAN only needs to be slightly reconstructed, effectively reducing costs.

In addition, the packet transmission method provided in this embodiment of this application may be applied to a packet transmission scenario between different sites, especially in a scenario in which real-time packet transmission needs to be performed between different sites, such as remote office, a video conference, or a remote desktop. This effectively reduces a probability of occurrence of problems such as disconnection and slow access, improves link stability, and greatly meets application timeliness and real-time requirements.

### BRIEF DESCRIPTION OF DRAWINGS

FIG. 1 is a schematic diagram of an application scenario of a packet transmission method according to an embodiment of this application;
FIG. 2 is a schematic diagram of a structure of a cloud computing service system to which an SD-WAN is applied in the application scenario shown in FIG. 1 according to a related technology;
FIG. 3 is a schematic diagram of a structure of a cloud computing service system to which an SD-WAN is applied in the application scenario shown in FIG. 1 according to an embodiment of this application;
FIG. 4 is a schematic flowchart of a packet transmission method according to an embodiment of this application;
FIG. 5 is a schematic diagram of a structure of a header field of an entry according to an embodiment of this application;
FIG. 6 is a schematic diagram of a structure of an edge site of a cloud computing service system to which an SD-WAN is applied according to a related technology;
FIG. 7 is a schematic diagram of a structure of an edge site of a cloud computing service system to which an SD-WAN is applied according to an embodiment of this application;
FIG. 8 is schematic diagram of another structure of an edge site of a cloud computing service system to which an SD-WAN is applied according to an embodiment of this application;
FIG. 9 is a schematic diagram of a structure of a site according to an embodiment of this application;
FIG. 10 is a schematic flowchart of another packet transmission method according to an embodiment of this application;
FIG. 11 is a block diagram of a packet transmission apparatus according to an embodiment of this application;
FIG. 12 is a block diagram of another packet transmission apparatus according to an embodiment of this application;
FIG. 13 is a block diagram of still another packet transmission apparatus according to an embodiment of this application;
FIG. 14 is a block diagram of yet another packet transmission apparatus according to an embodiment of this application; and
FIG. 15 schematically provides a possible basic hardware architecture of a computer device according to an embodiment.

### DESCRIPTION OF EMBODIMENTS

To make objectives, technical solutions, and principles of this application clearer, the following further describes the implementations of this application in detail with reference to the accompanying drawings.

For ease of understanding by a reader, the following explains terms in the embodiments of this application.

A data center, also called a cloud data center or a central site, is used to provide services based on to-be-processed data generated by data sources. Usually, the data center is far away from the data source. For example, the data center is located to an equipment room in a provincial capital or a prefecture-level city in a country. A device in the data center obtains the to-be-processed data from the data source through remote connection or access. This causes a delay due to the remote connection or access. Therefore, a service deployed in the data center is usually a service that has a relatively low latency requirement.

An edge site, also referred to as a site, is configured to provide a service based on to-be-processed data generated by a data source. Usually, the edge site is close to the data source. For example, the edge site is a district/county equipment room or an access equipment room in a country. A delay in obtaining the to-be-processed data from the data source by the device in the edge site is relatively low. Therefore, a service deployed in the edge site is usually a service that has a relatively high requirement on real-time performance.

A service includes a computing service, a storage service, a network service, or the like. Any device or function that can be accessed by user equipment in a data center and/or an edge site may be considered as a service provided by the data center or the edge site. Usually, a service deployed in the data center is referred to as a central service or a central cloud service, and a service deployed in the edge site is referred to as an edge service or an edge cloud service.

External devices refer to devices outside the data center and edge sites. The peripheral device includes various physical or virtual devices such as a server or a terminal.

A wide area network (Wide Area Network, WAN), also called an external network or a public network, usually spans a large physical area. In this embodiment of this application, the wide area network is a network established by a network device other than the data center and the edge site. That is, a communication connection needs to be established between the data center and the edge site across the wide area network. For example, the wide area network includes a multi-protocol label switching (Multi-Protocol Label Switching, MPLS for short)-virtual private network (Virtual Private Network, VPN) and the internet (internet). The internet includes a wired or wireless transmission network such as a 3G (3rd-Generation) network, a 4G network, or a 5G network.

An SD-WAN is a service formed by applying SDN technologies to a wide area network scenario. This service is used to connect enterprises, data centers, internet applications, and cloud services with a wide address range. This service aims to help users (also called tenants) reduce wide area network costs and improve network connection flexibility.

Packet (message): includes one or more data packets (packet). The packet is a data unit exchanged and transmitted in a network.

A customer premise equipment (CPE), also called a customer premises equipment, refers to an equipment that directly connects a customer front end to a carrier network (such as the wide area network). "Premise" refers to a location of the equipment in the site, not a type of the equipment. For example, the CPE may include a gateway. The gateway may be a router (Router), a switch, or the like. The CPE may be a physical CPE or a virtual CPE (Virtual Customer Premise Equipment, VCPE). When the CPE is the physical CPE, the gateway is a physical gateway (internet gateway, IGW). When the CPE is a VCPE, the gateway is a virtual gateway (virtual gateway, VGW).

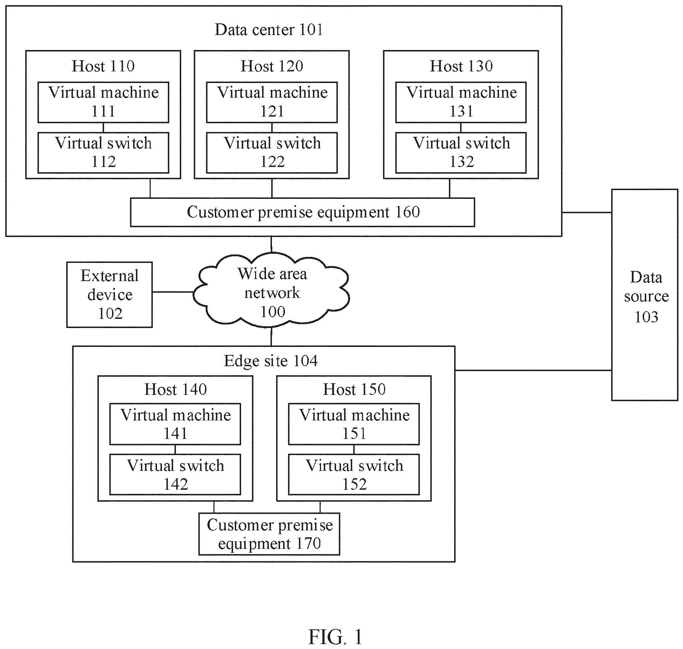

FIG. 1 is a schematic diagram of an application scenario of a file transfer system related to a packet transmission method according to an embodiment of this application. In this application scenario, a data center 101 includes one or more hosts. A host 110, a host 120, and a host 130 in the data center 101 are drawn in FIG. 1 as an example. In this embodiment of this application, the hosts, for example, the host 110, the host 120, and the host 130, may be configured to run virtual machines or containers. The deployed virtual machines and containers are used to provide services. Optionally, the data center also includes a host on which no virtual machine or container is deployed. FIG. 1 shows only an example of the hosts on which the virtual machines are deployed. The host on which no virtual machine or container is deployed is usually configured to provide a service having a relatively high requirement on security or computing performance. For ease of understanding by readers, subsequent embodiments are mainly described by using an example in which the virtual machines run on the hosts. For a scenario in which the containers run on the hosts, refer to a specific process in the scenario in which the virtual machines run.

As shown in FIG. 1, at least one virtual machine and a virtual switch run on a host. For example, a virtual machine 111 and a virtual switch 112 are deployed on the host 110, a virtual machine 121 and a virtual switch 122 are deployed on the host 120, and a virtual machine 131 and a virtual switch 132 are deployed on the host 130. Optionally, a CPE 160 is deployed in the data center 101.

The data center 101 obtains data from a data source 103, and provides a service based on the obtained data. The data source 103 may be any data generation device. The data source 103 may be connected to the data center 101 by using a data transmission line, or may be connected to the data center 101 through a wide area network 100 or another wired or wireless transmission network. The data transmission line may be various data transmission lines, power lines, or the like. In addition, the data source 103 may also be located in the data center 101. In other words, the data center 101 may also provide a service based on data generated inside the data center 101. In addition, the data source 103 is integrated in a peripheral device 102. In other words, the data center 101 may provide a service based on data generated by the peripheral device 102. In this embodiment of this application, there may be one or more data sources.

Similarly, the edge site 104 includes one or more hosts. For example, a host 140 and a host 150 in the edge site 104 are plotted in FIG. 1. The hosts can be used to run virtual machines or containers. The deployed virtual machines and containers are used to provide services. Optionally, the edge site also includes a host on which no one of the virtual machine or the container is deployed, and the host on which no one of the virtual machine or the container is deployed is not shown in FIG. 1. For ease of understanding by readers, subsequent embodiments are mainly described by using an example in which the virtual machines run on the hosts. For a scenario in which the containers run on the hosts, refer to a specific process in the scenario in which the virtual machines run. As shown in FIG. 1, a virtual machine 141 and a virtual switch 142 are deployed on the host 140, and a virtual machine 151 and a virtual switch 152 are deployed on the host 150. Optionally, a CPE 170 is deployed on the edge site 104.

The edge site 104 may also obtain data from the data source 103, and provide a service based on the obtained data. Similarly, the data source 103 may be connected to the edge site 104 by using a data transmission line, or may be connected to the edge site 104 through the wide area network 100 or another wired or wireless transmission network. The data transmission line may be various data transmission lines, power lines, or the like. In addition, the data source 103 may also be integrated in the edge site 104. In other words, the edge site 104 may also provide a service based on data generated inside the edge site 104. In addition, the data source 103 may also be the peripheral device 102. In other words, the edge site 1002 may provide a service based on data generated by the peripheral device 102. The data center and the edge site can also be connected to different data sources to provide services based on data generated by different data sources.

Optionally, the data center 101 and the edge site 104 communicate with each other through the wide area network 100. Alternatively, the data source 103 may be connected to only one of the data center 101 and the edge site 104.

Deploying different services in the data center and edge sites can improve the real-time performance of the services and reduce the delay. The following uses real-time video collection and analysis services as an example. In this scenario, the data source 103 may be a camera device. A geographical location of the edge site 104 is relatively close to the camera device, and a geographical location of the data center 101 is relatively far from the camera device. This service processes and analyzes video data collected by the camera device to identify specific objects contained in videos. The service includes obtaining the video data from the camera device, performing preliminary processing on the video data to obtain structured video data, and then identifying a specific object included in the video based on the structured video data. If the service is deployed in a device of the data center 101, transmitting video data with a relatively large data amount from the camera device to the data center 101 that is far away from the camera device causes an extremely long delay. This seriously affects real-time performance of identifying the specific object. Therefore, a preliminary processing process of the video data may be deployed at the edge site 104, and a process of identifying the specific object may be deployed at the data center 101. After the preliminary processing of the video data is completed at the edge site 104 and the structured video data is obtained, the structured video data is transmitted to the data center 101, and the identification of the specific object is completed in the data center 101. Compared with that of unprocessed video data, a data amount of the structured video data obtained through preliminary processing is relatively small. Therefore, a delay of transmitting the structured video data between the edge site 104 and the data center 101 is far less than a delay of transmitting the unprocessed video data, and network resources such as network bandwidths are further saved. Therefore, the services can be deployed across the data center and the edge site to save resources and improve service timeliness.

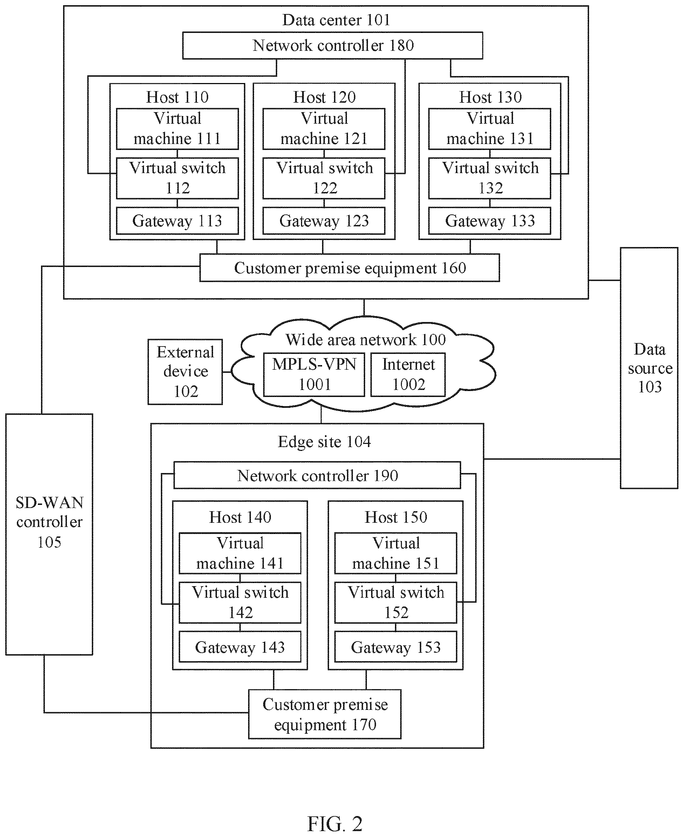

FIG. 2 is a schematic diagram of a structure of a cloud computing service system to which an SD-WAN is applied in the application scenario shown in FIG. 1 according to a related technology. Based on FIG. 1, the cloud computing service system further includes a network controller 180 deployed in the data center 101, a network controller 190 deployed in the edge site 104, and an SD-WAN controller 105.

The data center 101 includes the host 110, the host 120, and the host 130. At least one virtual machine, a virtual switch, and a gateway are deployed on each host. As shown in FIG. 2, based on FIG. 1, a gateway 113 is further deployed on the host 110, a gateway 123 is further deployed on the host 120, and a gateway 133 is further deployed on the host 13. Each virtual switch has a plurality of virtual ports that are in a one-to-one correspondence with ports on the gateway. When the virtual machine in the data center 101 needs to access the wide area network 100, the host is connected to the CPE 160 by using a port of the gateway, so as to be connected to the wide area network, thereby implementing data interworking between the host and the wide area network.

The network controller 180 may implement unified control on the virtual switch 112, the virtual switch 122, and the virtual switch 132 by using a forwarding flow table. The virtual switch 112, the virtual switch 122, and the virtual switch 132 determine a forwarding path of a packet (also referred to as a data packet) based on the forwarding flow table delivered by the network controller 180, to implement communication between the virtual machines and between a virtual machine and the wide area network 100. To communicate with the wide area network 100 is to communicate with the peripheral device 102 or the peer site through the wide area network 100.

Similarly, the foregoing architecture may also be used for the edge site 104. Similarly, the plurality of hosts in the edge site all have gateways, and all run virtual machines. As shown in FIG. 2, based on FIG. 1, a gateway 143 is further deployed on the host 140, and a gateway 153 is further deployed on the host 150. When the virtual machine in the edge site 104 needs to access the wide area network 100, the host is connected to the CPE 170 by using a port of the gateway, so as to connect to the wide area network, thereby implementing data interworking between the host and the wide area network. For the communication manner, refer to the communication manner of the data center 101.

The network controller 190 may implement unified control on the virtual switch 142 and the virtual switch 152 by using a forwarding flow table. The virtual switch 142 and the virtual switch 152 determine a forwarding path of a packet based on the forwarding flow table delivered by the network controller 190, to implement communication between the virtual machines and between a virtual machine and the wide area network 100. To communicate with the wide area network 100 is to communicate with the peripheral device 102 or the peer site through the wide area network 100.

For example, the wide area network 100 may include two types of communication links: an MPLS-VPN 1011 and the internet 1012. It should be noted that the wide area network 100 may further have another type of communication link, for example, a communication link of another private network. This is not limited in this embodiment of this application.

The SD-WAN controller 105 is configured to control the CPE in the data center 101 and the CPE in the edge site 104, for example, perform automatic configuration of the CPE, to implement automatic establishment of an overlay (overlay, also referred to as a tunnel) between the data center 101 and the edge site 104.

In FIG. 2, packet forwarding across the wide area network requires participation of a user. The following describes a packet transmission method based on the cloud computing service system shown in FIG. 2 by using a process in which the virtual machine 141 at the edge site 104 sends a packet to the virtual machine 111 as an example.

The user needs to identify a service scenario, for example, a video data analysis scenario, and identify a transmission path of a service packet. If the packet needs to cross the wide area network, the user needs to log in to the SD-WAN controller 105, apply for and create a communication link to cross the wide area network, and configure related tunnel configuration information. The SD-WAN controller 105 separately delivers the tunnel configuration information to the CPEs of the data center 101 and the edge site 104. For example, the tunnel configuration information includes port information of one or more communication links. The CPEs of the data center 101 and the edge site 104 establish a communication bearer, for example, an MPLS-VPN bearer or an internet bearer, based on the tunnel configuration information, and establish a communication link based on the communication bearer. In this way, an inter-site communication network can be configured.

A user logs in to a cloud operating system platform of the network controller 180 of the central site, applies for a virtual machine or a container inside the edge site, and configures parameters such as networks, interfaces, and forwarding tunnels of network elements such as a virtual switch and a gateway, so as to complete creation of an internal service network of the central site.

The user then logs in to a cloud operating system platform of the network controller 190 of the edge site, applies for a virtual machine or a container inside the edge site, and configures parameters such as networks, interfaces, and forwarding tunnels of network elements such as a virtual switch and a gateway, so as to complete creation of an internal service network of the edge site.

After the internal service networks of the edge site and the central site are created, the virtual machine 141 sends a packet to the virtual switch 142 on the host 140, where the packet carries a destination address, that is, an address of the virtual machine 111. The virtual switch 142 identifies, based on the destination address carried in the packet, that the destination device (that is, the virtual machine 111) of the packet is located in another host, and the virtual switch 142 forwards the packet to the CPE 170 through the gateway 143. After receiving the packet, the CPE 170 compares the packet with information in a built-in application library, performs optimization on the successfully matched packet in the wide area network, and sends the packet to the CPE 160 of the data center 101 through the wide area network 100 based on the established communication link. The CPE 160 sends the packet to the virtual switch 112 by using the gateway 113, and the virtual switch 112 sends the packet to the virtual machine 111.

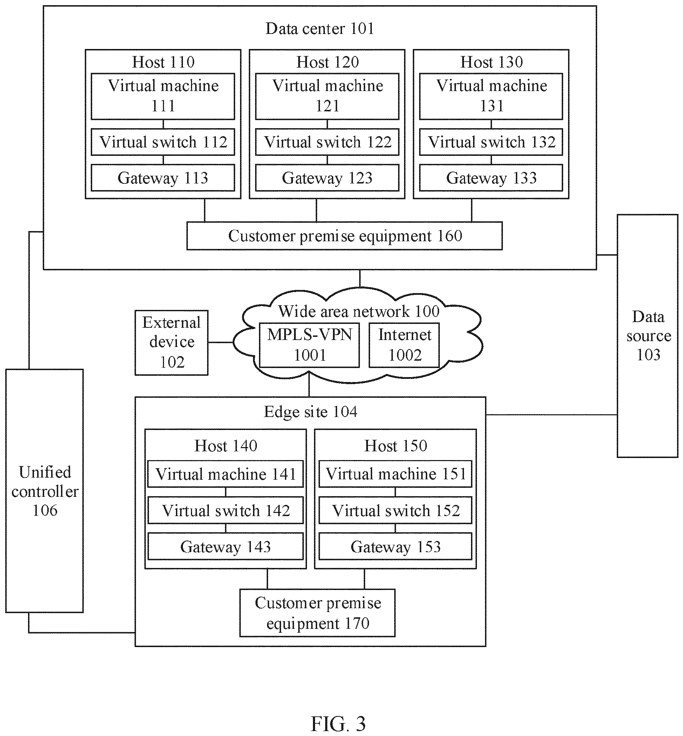

FIG. 3 is a schematic diagram of a structure of a cloud computing service system to which an SD-WAN is applied in the application scenario shown in FIG. 1 according to an embodiment of this application. The cloud computing service system provided in this embodiment of this application may be applied to a plurality of real-time or non-real-time scenarios, for example, an operator mobile edge computing (Mobile-Edge Computing, MEC) scene, a video (or image) collection and analysis scenario, a game scenario, a live broadcast scenario, an instant messaging scenario, remote office, a video conference, or a remote desktop. The video (or image) collection and analysis scenario may be used to implement functions such as city surveillance, criminal positioning and search, or license plate recognition.

In an optional manner, as shown in FIG. 3, each host is connected to a customer premise equipment by using a corresponding gateway, to implement a connection to a wide area network. In another optional manner, each host in a plurality of hosts may also be connected to another host by using a corresponding gateway, and the another host is connected to the customer premise equipment by using a corresponding gateway (not shown in FIG. 3). The another host may be a preset host, and is a host other than the plurality of hosts.

Based on FIG. 1, the cloud computing service system further includes a unified controller 106. Compared with that in the cloud computing service system shown in FIG. 2, in the cloud computing service system provided in this embodiment of this application, the network controller 180, the network controller 190, and the SD-WAN controller 105 are no longer disposed, and packet communication across the wide area network can be implemented through cooperation of one unified controller 106 and each site. An inter-site communication network (also referred to as an inter-site service network) and an internal service network of the site are uniformly orchestrated by the unified controller 106 according to a service scenario.

However, if the network controller 180 and the network controller 190 are no longer disposed, when a site sends a packet to a peer site, the site that sends the packet needs to identify whether the obtained packet is a packet transmitted across the wide area network and whether optimization needs to be performed in the wide area network, so as to transmit a subsequent packet. How to effectively identify the transmission path of the packet and whether optimization needs to be performed in the wide area network is a problem that urgently needs to be resolved.

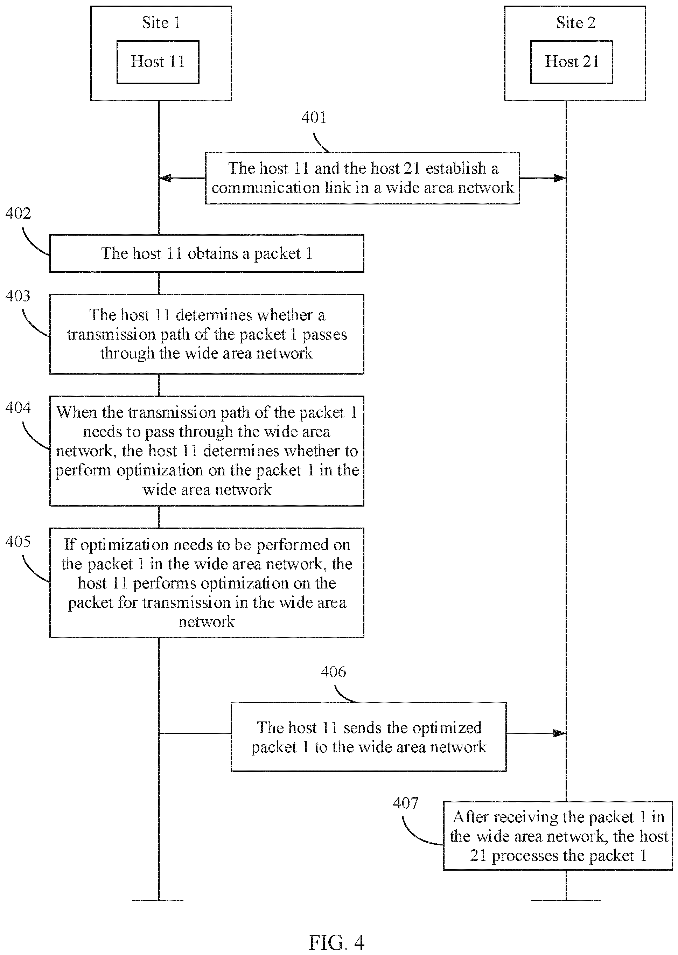

An embodiment of this application provides a packet transmission method. It is assumed that the method is applied to the cloud computing service system shown in FIG. 3. It is assumed that a host 11 in a site 1 sends a packet 1 to a host 21 in a site 2. The site 1 may be a data center or an edge site, and the site 2 is different from the site 1. As shown in FIG. 4, the method includes the following steps.

Step 401: The host 11 and the host 21 establish a communication link in a wide area network.

Refer to FIG. 3. According to a service requirement, a user may apply, on the network operation platform corresponding to the unified controller 106, for a virtual machine (and/or a container) corresponding to a service, select a site (for example, an edge site or a data center) in which the virtual machine (and/or the container) is located, set inter-site communication network information, and set information, for example, an optimization service (including optimization performed for transmission in the wide area network) required by the virtual machine (and/or the container). The inter-site communication network information is used to establish network topology information to which at least two sites belong, and a network topology between the at least two sites may be determined based on the network topology information. For example, the inter-site communication network includes: network topology information between two sites that perform cross-wide area network communication, for example, one or more of a quantity of created networks (Network, also referred to as a layer-2 network) and a network segment, a quantity of subnets (Subnet, also referred to as a layer-3 subnet) and a network segment, and network egress information.

The unified controller 106 creates, based on an operation performed by the user on the network operation platform, a virtual machine and/or a container in a site indicated by an operation instruction generated by the operation, and after the virtual machine and/or the container are/is successfully created, obtains an internet protocol (Internet Protocol, IP) address of the created virtual machine and/or container from a network segment indicated in inter-site communication network information configured by the user, and records information about the created virtual machine and/or container. For ease of description, a virtual machine is used as an example for description in subsequent embodiments. For a processing process of a container, refer to the processing process of the virtual machine.

For example, the information about the virtual machine includes one or more of a media access control address (Media Access Control Address, MAC address) of the virtual machine, an IP address of the virtual machine, a site to which the virtual machine belongs, and information about whether to perform optimization in the wide area network.

The unified controller determines, based on obtained information about virtual machines and a site in which the virtual machines are deployed, a forwarding path of a packet (that is, a transmission path of a packet) between virtual machines related to the service of the user in the cloud computing service system, and further determines whether communication between the different virtual machines uses the wide area network. If the communication between the different virtual machines uses the wide area network, the unified controller controls a CPE in the site to which the different virtual machines belong, so as to establish a communication link.

For example, if the user selects a plurality of virtual machines according to a service requirement, and the plurality of virtual machines are distributed at a plurality of different sites, the unified controller 106 may generate tunnel configuration information between every two different sites based on information about the plurality of virtual machines and the inter-site communication network information, and delivers each piece of tunnel configuration information to the CPEs in the two sites. Optionally, each piece of tunnel configuration information includes port information of one or more communication links. For example, if two different sites include a site 1 and a site 2, the unified controller generates tunnel configuration information corresponding to the site 1 and the site 2, where the tunnel configuration information includes port information of one or more communication links between the site 1 and the site 2. The site 1 and the site 2 correspondingly establish one or more communication links in the wide area network based on the received tunnel configuration information. For example, if the tunnel configuration information includes port information of an MPLS-VPN link and port information of an internet link, the site 1 and the site 2 establish an MPLS-VPN bearer in the wide area network based on the received tunnel configuration information and establish an MPLS-VPN link based on the bearer; and establish an internet bearer and establish an internet link based on the bearer. In this way, the site 1 and the site 2 implement configuration of the inter-site communication network under the control of the unified controller.

It should be noted that the site 1 and the site 2 separately perform inter-site communication network configuration by using respective CPEs. Refer to FIG. 3. For example, one of the site 1 and the site 2 is the data center 101, and the other is the edge site 104. The CPE 160 and the CPE 170 establish a communication link in the wide area network based on the received tunnel configuration information sent by the unified controller.

In a related technology, the user needs to identify a service scenario and a transmission path of a service packet (for example, whether the service packet passes through the wide area network). If the packet needs to be transmitted across the wide area network, the user may log in to a network operation platform corresponding to the SD-WAN controller, apply for and create a cross-wide area network communication link, and configure related tunnel configuration information. This process is complex, and has high requirements on professional skills of users, resulting in low reliability of tunnel configuration information.

However, in this embodiment of this application, the user only needs to specify a plurality of sites in which virtual machines are distributed and inter-site communication network information. The unified controller may identify a service scenario (for example, whether a service packet passes through a wide area network) based on information about the plurality of sites and the inter-site communication network information, plan a transmission path of the packet, and generate tunnel configuration information between every two different sites. The user does not need to plan the transmission path of the packet, the transmission path of the packet is transparent to the user, and the tunnel configuration information may be automatically generated by the unified controller. Therefore, this process is easy to operate, has low requirements on professional skills of the user, and effectively improves user experience. In addition, reliability of the generated tunnel configuration information is relatively high. For example, the user applies for two virtual machines, which are respectively located in a Beijing site and a Shanghai site, and inter-site communication network information includes: a quantity of networks is 1, a corresponding network segment is ^{∗∗∗∗∗∗}, a quantity of subnets is 2, and a corresponding network segment is ^{∗∗∗∗}. In this case, the unified controller plans, based on information about the Beijing site and the Shanghai site and the inter-site communication network information, a transmission path of a packet from the Beijing site to the Shanghai site, generates tunnel configuration information between the two sites, and controls the two sites to establish a communication connection based on the tunnel configuration information.

Step 402: The host 11 obtains a packet 1. Step 403 is performed.

Content of the packet 1 is related to a scenario to which the packet transmission method provided in this embodiment of this application is applied. For example, the packet transmission method may be applied to a video collection and analysis scenario, a game scenario, a live broadcast scenario, an instant messaging scenario, or the like. Optionally, when the packet transmission method is applied to the video collection and analysis scenario, the packet 1 may be generated by the host 11, and includes collected video data or processed video data.

Refer to FIG. 1 or FIG. 3. For example, the host 11 is the host 140, and the packet 1 may be generated by the virtual machine 141 and transmitted to the virtual switch 142. When an action of obtaining the packet 1 is performed by the virtual switch 142, the virtual switch 142 directly receives the packet 1 generated by the virtual machine 141. When the action of obtaining the packet 1 is performed by the gateway 143, the gateway 143 receives the packet 1 forwarded by the virtual switch 142.

Step 403: The host 11 determines whether a transmission path of the packet 1 passes through the wide area network. When the transmission path of the packet 1 passes through the wide area network, step 404 is performed.

In this embodiment of this application, the network controller is no longer correspondingly disposed for the site 1. Therefore, whether the transmission path of the packet 1 passes through the wide area network is no longer set by the network controller, but is autonomously determined by the host 11. For example, a process in which the host 11 determines whether the transmission path of the packet 1 passes through the wide area network includes the following steps.

Step A1: The host 11 obtains a destination address of the packet 1.

The destination address is an address of a destination host to which the packet is transmitted, and is used to identify a receiver of the packet. For example, the destination address includes a destination IP address or a destination MAC address.

Step A2: The host 11 determines, based on the obtained destination address, whether the transmission path of the packet 1 passes through the wide area network.

Optionally, the host 11 may determine, by detecting whether the destination address is the address of the host in the site 1, whether the transmission path of the packet 1 passes through the wide area network. When the destination address is the address of the host in the site 1, the host 11 determines that the transmission path of the packet 1 does not pass through the wide area network; or when the destination address is not the address of the host in the site 1, the host 11 determines that the transmission path of the packet 1 passes through the wide area network. For example, the host 11 may obtain in advance an address table that records an address (for example, an IP address or a MAC address) in the site 1, and detect, by querying the address table, whether the destination address is the address of the host in the site 1. If the destination address is recorded in the address table, the destination address is the address of the host in the site 1; or if the destination address is not recorded in the address table, the destination address is not the address of the host in the site 1. The address table may be delivered by the unified controller in advance, or may be set by an administrator, or may be delivered in real time by the unified controller when detecting that the host 11 has an action of generating a packet.

Optionally, the host 11 may have obtained first configuration information before obtaining the destination address, where the first configuration information is used to indicate the host 11 to determine whether a transmission path of the obtained packet passes through the wide area network. The first configuration information may be information delivered by the unified controller in advance; or may be information agreed with the unified controller (for example, information set by an administrator during networking); or may be information delivered in real time by the unified controller when detecting that an action of generating a packet exists in the host 11. For example, referring to step 401, the unified controller may identify whether the service packet of the user passes through the wide area network. Therefore, the unified controller delivers information to the host 11 in advance, and it can be ensured that the host 11 accurately determines whether the transmission path of the obtained packet 1 passes through the wide area network.

In an optional example, the first configuration information may be represented in a manner of a table (table). This embodiment of this application is described in the following several manners.

In a first optional manner, the host 11 maintains a first table in advance, where the first table is used to record a correspondence between a plurality of destination addresses and first indication information, and the first indication information is used to indicate whether a transmission path of a packet passes through a wide area network. The host 11 may query the first table based on the obtained destination address of the packet 1, and determine, based on the first indication information obtained through query, whether the transmission path of the packet 1 passes through the wide area network. For example, if the first indication information indicates that the transmission path of the packet passes through the wide area network, the host 1 determines that the transmission path of the packet 1 passes through the wide area network; or if the first indication information indicates that the transmission path of the packet does not pass through the wide area network, the host 1 determines that the transmission path of the packet 1 does not pass through the wide area network. The first indication information may be represented in a plurality of manners. For example, 0 indicates that the transmission path of the packet passes through the wide area network, and 1 indicates that the transmission path of the packet does not pass through the wide area network. It is assumed that Table 1 is the first table. As shown in Table 1, if the destination address of the packet 1 is X1, it is learned by querying Table 1 that the first indication information is "0", and the host 1 determines that the transmission path of the packet 1 passes through the wide area network.

**Table 1**

| Destination address | First indication information |
|---|---|
| X1 | 0 |
| X2 | 1 |
| ... | ... |

In a second optional manner, the destination address is a destination IP address, the host 11 maintains a second table in advance, the second table is used to record a correspondence between a plurality of IP address ranges and first indication information, and the first indication information is used to indicate whether a transmission path of a packet passes through a wide area network. The host 11 may query the second table based on the obtained destination address of the packet 1, and determine, based on first indication information corresponding to an IP address range to which the destination IP address belongs, whether the transmission path of the packet 1 passes through the wide area network. For explanations of the first indication information, refer to the foregoing first optional manner.

In the foregoing two optional manners, the host 11 may quickly determine, by querying the table, whether the transmission path of the packet 1 passes through the wide area network, thereby improving packet processing efficiency.

In a third optional manner, the host 11 maintains a third table in advance. The third table is used to record an operation (also referred to as an action) corresponding to each of a plurality of destination addresses. The operation includes an operation that needs to be performed by the host when the obtained packet is a packet whose transmission path passes through the wide area network. The host 11 may query the third table based on the obtained destination address of the packet 1 to obtain an operation corresponding to the destination address, and execute the operation obtained by querying.

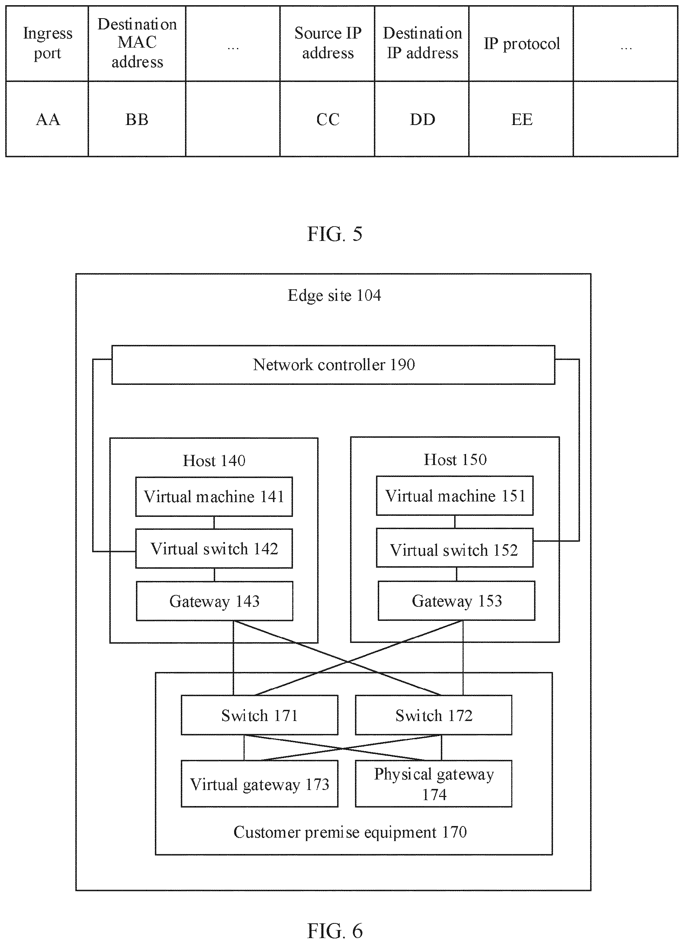

In this embodiment of this application, the third table includes a plurality of entries (entry). Each entry usually includes a header field (also referred to as a match field) and an operation (action) field. The header field is located in a header of an entry and includes an identifier of the entry. For example, the identifier may be a 5-tuple (Tuple), a 10-tuple, or a 12-tuple. The header field is used to perform matching on content of a received packet. FIG. 5 is a schematic diagram of a structure of a header field of an entry according to an embodiment of this application. The header field includes an ingress port field, a destination MAC address field, a source IP address field, an IP protocol field, and the like.

An operation recorded in the operation field is one or more operations, for example, forwarding (forward) or discarding (drop), performed on the matched packet.

In this way, the host 11 may query the third table based on the destination address of the packet 1, find, in a plurality of entries, a header field whose destination address is the same as the destination address of the packet 1, and use an operation in an operation field in an entry in which the header field is located as an operation corresponding to packet 1. Then, the host 11 performs the operation. For example, if the entry to which the header field shown in FIG. 5 belongs is located in the third table, and the destination address of the packet 1 is the destination IP address: DD, the entry to which the header field shown in FIG. 5 belongs may be determined, by querying the third table, as an entry that matches the packet, and an operation in an operation field of the entry is determined as an operation that needs to be performed on the packet 1 and that is obtained through query.

As described above, the operation recorded in the entry of the third table includes an operation that needs to be performed by the host when the obtained packet is a packet whose transmission path passes through the wide area network. In an example manner, the third table records only an operation that needs to be performed by the host when the obtained packet is a packet whose transmission path passes through the wide area network. If the host 11 does not obtain, by querying the third table based on the obtained destination address of the packet 1, the operation corresponding to the destination address, the host 11 determines that the transmission path of the packet 1 does not pass through the wide area network, and transmits the packet 1 in the site 1 to which the host 11 belongs in a conventional routing manner, for example, forwards the packet 1 in the site 1 according to a set routing table (also referred to as a forwarding table or a forwarding flow table).

In another example manner, the operation recorded in the third table further includes an operation that needs to be performed by the host when the obtained packet is a packet whose transmission path does not pass through the wide area network. It is assumed that when the obtained packet is the packet whose transmission path passes through the wide area network, the operation that needs to be performed by the host is a first type operation, and when the obtained packet is not the packet whose transmission path passes through the wide area network, the operation that needs to be performed by the host is a second type operation. There may be a plurality of definition manners of various operations. The following several manners are used as examples for description in this embodiment of this application.

In a first optional example, the first type operation may be adding a first tag to a packet that matches an entry in which the operation is located, that is, the first type operation is an adding operation of the first tag, and the first tag indicates that a transmission path of the matched packet passes through the wide area network. The second type operation may be adding a second tag to a packet that matches an entry in which the operation is located, that is, the first type operation is an adding operation of the second tag, and the second tag indicates that a transmission path of the matched packet does not pass through the wide area network (that is, the transmission path of the packet is inside a site in which the host is located). Both the first tag and the second tag may include one or more characters. For example, the character is a binary character. For example, the first mark is 0, and the second mark is 1. In an optional example, the second type operation may be a null (null) operation, that is, no operation is performed. In another optional example, the second type operation may alternatively be a routing operation in the site 1, for example, a forwarding operation. In this way, the third table may be compatible with a format of a conventional forwarding flow table, thereby reducing overheads of processing the third table by the host, and reducing space of a storage table.

Optionally, when a tag needs to be added, the first tag or the second tag may be added to a header of the packet, for example, an idle byte of the header.

It should be noted that, if the host 11 finds no operation or finds a null operation in the third table, the host 11 determines that the transmission path of the packet 1 does not pass through the wide area network, and transmits the packet 1 in the site 1 to which the host 11 belongs in a conventional routing manner, for example, forwards the packet 1 in the site 1 according to a set routing table.

In a second optional example, the first type operation may be an operation of querying a target table, and the target table records an operation performed on a packet whose transmission path passes through the wide area network. For example, the target table may be the fourth table or the fifth table in step 404.

The second type operation may be an operation of querying the set routing table, and the routing table is used to indicate intra-site routing of the packet in the site 1.

In conclusion, the host 11 may detect, by performing an operation in the third table, whether the transmission path of the packet 1 passes through the wide area network. Further, in the foregoing second optional example, a next action may be further performed on whether the transmission path of the packet 1 passes through the wide area network, thereby improving packet processing efficiency.

Optionally, the foregoing entry further includes a state field (also referred to as a counter). The state field is used to count statistical data of the entry, and the statistical data is preset data that needs to be counted, for example, a quantity of processed data packets.

It should be noted that, if the host 11 detects in step 403 that the transmission path of the packet 1 does not pass through the wide area network, the host 11 processes the packet 1 according to a conventional technology. For example, the packet 1 is transmitted in the site 1 to which the host 11 belongs in a conventional routing manner, and the packet 1 is forwarded in the site 1 according to the set routing table until the packet 1 is forwarded to the host 21 of the site 2. FIG. 4 does not show this process.

Step 404: When the transmission path of the packet 1 needs to pass through the wide area network, the host 11 determines whether to perform optimization on the packet 1 in the wide area network. After it is determined to perform optimization on the packet 1 in the wide area network, step 405 is performed.

The optimization performed in the wide area network is one or more types of processing for performing transmission optimization on the packet whose transmission path passes through the wide area network. For example, the optimization includes at least one of a deep packet inspection (Deep packet inspection, DPI) application identification (also referred to as DPI detection) operation, an application scheduling operation, an application routing operation, an application acceleration operation, a firewall operation, and a packet encryption operation.

The "depth" in the so-called deep packet parsing is compared with a layer of common packet parsing. Usually, common packet analysis analyzes only content below four layers of a data packet in the packet, for example, the content includes a source IP address, a destination IP address, a source port, a destination port, and a protocol type. In addition to the analysis of the foregoing layers, deep packet parsing further analyzes an application layer to identify various applications and content.

The DPI application identification operation refers to an operation of identifying application information (that is, application layer information) in a packet through deep packet parsing.

The application scheduling operation refers to scheduling a service packet based on an application (or referred to as a service), for example, adjusting a priority of service packet processing (for example, encryption or forwarding), adjusting a sequence of service packet processing, or adjusting a bandwidth occupied during service packet scheduling. Performing the application scheduling operation on a packet may enable the packet to be preferentially processed and/or occupy more bandwidth, thereby improving transmission efficiency and transmission quality of the packet.

The application routing operation, also referred to as application-aware routing (Application-Aware Routing) based on an application (or referred to as a service), refers to an operation of selecting one communication link from at least two communication links based on an application. For example, the at least two communication links include an MPLS-VPN link and an internet link.

The application acceleration operation, also referred to as an IP application acceleration operation, refers to the access and transmission acceleration based on a layer 4 protocol application. The application acceleration operation may be implemented in a plurality of manners. For example, compression processing is performed on a packet to reduce an amount of transmitted data, or some invalid (or less effective) key frames in the packet are discarded to reduce an amount of transmitted data. Application acceleration is performed by compressing packets or discarding key frames. This increases a packet transmission rate, reduces a public network bandwidth, and reduces packet transmission overheads. For example, the application acceleration operation may be applicable to a scenario in which a data amount of a data packet carried in the packet is relatively large (that is, the data amount is greater than a specified data amount threshold), for example, a video transmission scenario.

The firewall operation refers to establishing a relatively isolated protection barrier between a site and a wide area network by combining software and hardware devices used for security management and filtering. The firewall filters out packets that are forbidden to be sent (that is, the packets cannot be transmitted outside the site) or filters out packets that are forbidden to be received (that is, the packets cannot be transmitted to virtual machines or containers inside the site). In this way, information security can be protected. Optionally, the firewall operation further includes establishing a relatively isolated protection barrier between different services of a same site, so that packets of different services do not affect each other. For example, the different services are a web page service and a database service.

The packet encryption operation refers to an operation of encrypting a packet, so that packet security can be improved. In this embodiment of this application, the packet encryption operation may be an operation of encrypting a packet by using a symmetric encryption algorithm, or may be an operation of encrypting a packet by using an asymmetric encryption algorithm. For example, in this embodiment of this application, the packet is encrypted according to an internet protocol security (Internet Protocol Security, IPsec), a transport layer security (Transport Layer Security, TLS), or a datagram transport layer security (Datagram Transport Layer Security, DTLS).

It should be noted that the foregoing optimization may further include another type of operation. Details are not described again in this embodiment of this application. Information about various operations included in the foregoing optimization may be manually preconfigured in the site 1, or information about various operations included in the optimization may be set in the site 1 in a static configuration manner. For example, information about various operations included in the optimization is sent by a unified controller to the site 1 in advance by using a configuration instruction, and is stored by the site 1. In this way, a network controller does not need to be separately disposed for the site 1, thereby reducing management costs of the site 1.

Optionally, when the transmission path of the packet 1 needs to pass through the wide area network, a process in which the host 11 determines whether to perform optimization on the packet 1 in the wide area network includes:

The host determines, based on the target parameter, whether to perform optimization on the packet for transmission in the wide area network. The target parameter is used to reflect a service feature corresponding to the packet. For example, if data carried in the packet is video data, the target parameter is used to reflect a feature of a video service. For example, the target parameter includes any one or any combination of the following:
a protocol used to transmit a packet; or a feature (also referred to as a flow feature) of the packet; or information in an application layer protocol (application layer protocol) field of the packet.

The protocol used to transmit the packet may be a pre-agreed protocol, or may be carried in the packet, or may be delivered by the unified controller to the host. A manner of obtaining the protocol is not limited in this embodiment of this application. For example, the protocol used to transmit the packet may include an application layer protocol, for example, a hypertext transfer protocol (HyperText Transfer Protocol, HTTP), a file transfer protocol (File Transfer Protocol, FTP), or a terminal network application (Terminal Network, Telnet) protocol.

The packet obtained by the host usually includes two types: one is a plaintext packet, that is, a non-encrypted packet, and the other is a ciphertext packet, that is, an encrypted packet. For the plaintext packet, the host may directly extract information in the application layer protocol field. For the ciphertext packet, the host may first decrypt the packet, and then extract information in the application layer protocol field from the decrypted packet.

The feature of the packet is used to reflect an attribute of the packet itself, for example, the feature includes a packet length of the data packet and/or a sending interval (also referred to as a packet sending interval) of the data packet. The feature of the packet can be obtained in a plurality of ways. In an optional manner, the packet is a plaintext packet, and the packet carries a field indicating the feature of the packet. The host may determine the feature of the packet based on the field. In another manner, the packet is a ciphertext packet, and the packet carries a field indicating the feature of the packet. The host may first decrypt the packet (for example, decode the packet in an agreed decryption manner), and determine the feature of the packet based on the field indicating the feature of the packet in the decrypted packet. In still another optional manner, regardless of the type of the packet, the host may perform feature analysis on the received packet, so as to obtain the feature of the packet.

The foregoing application layer is an application layer in a network protocol stack model. The information in the application layer protocol field of the packet varies according to a protocol used to transmit the packet. For example, the information in the application layer protocol field of the packet includes any one or any combination of the following:
a source IP address; or a source port; or a destination IP address; or a destination port; or a transport layer protocol.

For definitions of the source IP address, the source port, the destination IP address, the destination port, and the transport layer protocol, refer to a definition of a conventional 5-tuple. The source IP address is an IP address of a source host of the packet (for example, an IP address of a virtual machine that is in the source host and that generates the packet), and is used to identify a generator of the packet. The destination IP address is an address of a destination host for packet transmission (for example, an IP address of a destination virtual machine for packet transmission in the destination host), and is used to identify a receiver of the packet.

The source port and the destination port are protocol ports, and may be pre-agreed ports used to transmit the target service packet. The target service packet is a packet that conforms to a service type to which the packet 1 belongs. For example, if the application layer protocol is HTTP, both the source port and the destination port are ports 80 or ports 8080; if the application layer protocol is FTP, both the source port and the destination port are ports 20 or ports 21.

The transport layer protocol is a protocol at a transport layer that is used to transmit the packet, for example, transmission control protocol (Transmission Control Protocol, TCP) or user datagram protocol (User Datagram Protocol, UDP).

It should be noted that the application layer protocol field of the packet may further include other information, for example, a source MAC address or a destination MAC address. Information content in the application layer protocol field of the packet is not limited in this embodiment of this application.

There may be a plurality of manners in which the host 11 determines, based on the target parameter, whether to perform optimization on a packet for transmission in the wide area network. In this embodiment of this application, the following two implementations are used as examples for description.

In a first implementation, when a preset condition is met, it is determined to perform optimization on the packet for transmission in the wide area network; or when a preset condition is not met, it is determined not to perform optimization on the packet for transmission in the wide area network. The preset condition includes any one or any combination of the following:
a protocol used to transmit the packet belongs to a specified protocol set; or a feature of the packet conforms to a specified feature; or information in an application layer protocol field of the packet belongs to a specified information set.

That the protocol used to transmit the packet belongs to the specified protocol set means that the protocol used to transmit the packet is a protocol included in the specified protocol set, and the specified protocol set includes one or more protocols.

There may be setting manners in which the feature of the packet meets the specified feature. For example, distribution of packet lengths of data packets of the packets conforms to a specified distribution feature (for example, normal distribution), and/or sending intervals (also referred to as packet sending intervals) of the data packets conform to a specified interval feature (for example, sending intervals of the data packets are equal and are specified duration).

The application layer protocol field of the packet may include one or more fields. That information in the application layer protocol field of the packet belongs to a specified information set means that in information in the one or more fields, information in each field belongs to a specified information set corresponding to the field.

For example, if the application layer protocol field of the packet includes a source IP address field, that the information in the application layer protocol field of the packet belongs to the specified information set includes: a source IP address in the source IP address field belongs to a first IP address set (or a first IP network segment). If the application layer protocol field of the packet includes a source port field, that the information in the application layer protocol field of the packet belongs to the specified information set includes: a source port in the source port field belongs to a first port set. If the application layer protocol field of the packet includes a destination IP address field, that the information in the application layer protocol field of the packet belongs to the specified information set includes: a destination IP address in the destination IP address field belongs to a second IP address set (or a second IP network segment). If the application layer protocol field of the packet includes the destination port field, that the information in the application layer protocol field of the packet belongs to the specified information set includes: a destination port in the destination port field belongs to a second port set. If the application layer protocol field of the packet includes a transport layer protocol field, that the information in the application layer protocol field of the packet belongs to the specified information set includes: a transport layer protocol in the transport layer protocol field belongs to the specified protocol set.

For example, it is assumed that the preset condition includes: a protocol used to transmit the packet belongs to a specified protocol set; and a source IP address in the source IP address field belongs to the first IP address set. The specified protocol set includes the HTTP, FTP, and Telnet protocols, and the first IP address set includes IP addresses: CC and FF. If the protocol used to transmit the packet is the HTTP, and the source IP address of the packet is the CC, it is determined to perform optimization on the packet 1 for transmission in the wide area network. Subsequent step 405 is performed.

In a second implementation, the host 11 may have obtained second configuration information before obtaining the target parameter, and the second configuration information is used to indicate the host 11 to determine whether to perform optimization on the packet 1 for transmission in the wide area network. The second configuration information may be information delivered by the unified controller in advance; or may be information agreed with the unified controller (for example, information set by an administrator during networking); or may be information delivered in real time by the unified controller when detecting that an action of generating a packet exists in the host 11. For example, referring to step 401, the unified controller may identify whether to perform optimization on the service packet for transmission in the wide area network. Therefore, the unified controller delivers information to the host 11 in advance, it can be ensured that the host 11 accurately determines whether to perform optimization on the packet 1 for transmission in the wide area network.

In an optional example, the second configuration information may be represented in a table manner. For example, the host 11 maintains a fourth table in advance, the fourth table is used to record a correspondence between a plurality of target parameters and second indication information, and the second indication information is used to indicate whether optimization needs to be performed on the packet in the wide area network. The host 11 may query the fourth table based on the obtained target parameter of the packet 1, and determine, based on the second indication information obtained through query, to perform optimization on the packet 1 for transmission in the wide area network. For example, if the second indication information indicates that optimization needs to be performed on the packet 1 for transmission in the wide area network, the host 1 determines to perform optimization on the packet 1 for transmission in the wide area network. If the second indication information indicates that optimization does not need to be performed on the packet 1 for transmission in the wide area network, the host 1 determines not to perform optimization on the packet 1 for transmission in the wide area network. The second indication information may be represented in a plurality of manners. For example, 0 indicates that optimization needs to be performed on the packet 1 for transmission in the wide area network, and 1 indicates that optimization does not need to be performed on the packet 1 for transmission in the wide area network. It is assumed that Table 2 is the fourth table, as shown in Table 2. It is assumed that the target parameter includes a source internet protocol IP address, a source port, a destination IP address, a destination port, and a transport layer protocol. If the target parameter of the packet 1 is the following: The source internet protocol IP address is a1, the source port is a2, the destination IP address is a3, the destination port is a4, and the transport layer protocol is a5, it is obtained by querying Table 2 that the second indication information is "0", and the host 1 determines to perform optimization on the packet 1 for transmission in the wide area network.

**Table 2**

| Target parameter | Second indication information |
|---|---|
| The source internet protocol IP address is a1, the source port is a2, the destination IP address is a3, the destination port is a4, and the transport layer protocol is a5. | 0 |
| The source internet protocol IP address is b1, the source port is b2, the destination IP address is b3, the destination port is b4, and the transport layer protocol is b5. | 1 |
| ... | ... |

In a second optional manner, the host 11 maintains a fifth table in advance. The fifth table is used to record an operation (also referred to as an action) corresponding to each of a plurality of target parameters. The operation includes an operation that needs to be performed when it is determined that optimization needs to be performed on the packet for transmission in the wide area network. The host 11 may query, based on the obtained target parameter of the packet 1, the fifth table to obtain an operation corresponding to the target parameter, and perform the operation obtained through query. The fifth table may include a plurality of entries. For a structure thereof, refer to the explanation in the foregoing step 403. A structure of the fifth table may be the same as or different from a structure of the third table. This is not limited in this embodiment of this application.

It is assumed that an entry of the fifth table includes a target parameter of a packet. For example, the target parameter is a source IP address. Refer to the entry structure in FIG. 5. The target parameter may be located in a header field. For example, a process in which the host 11 determines, based on the obtained target parameter, whether to perform optimization on the packet 1 for transmission in the wide area network may include: querying the fifth table based on the obtained target parameter; and performing an operation obtained by querying based on the obtained target parameter. The host 11 may query the fifth table based on the target parameter of the packet 1, find, in a plurality of entries, a header field whose target parameter is the same as the target parameter of the packet 1, and use an operation in an operation field in an entry in which the header field is located as the operation corresponding to the packet 1. Then, the host 11 performs the operation. For example, it is assumed that the entry to which the header field shown in FIG. 5 belongs is located in the fifth table, the target parameter is the source IP address, and the source IP address of the packet 1 is CC. In this case, through querying of the fifth table, the operation in the operation field in the entry to which the header field shown in FIG. 5 belongs may be determined as the target operation obtained through query.

It should be noted that, corresponding to different implementations in the third optional manner of step 403, processes in which the host 11 determines whether to perform optimization on the packet 1 for transmission in the wide area network are also different. In this embodiment of this application, the following two manners are used as examples for description:
Corresponding to the first optional example in the third optional manner of step 403, after adding the first tag to the packet 1, the host 11 may obtain the target parameter of the packet 1, and determine, based on the obtained target parameter, whether to perform optimization on the packet 1 for transmission in the wide area network.

Corresponding to the second optional example in the third optional manner of step 403, the host 11 may first obtain the target parameter of the packet 1, and then perform the first type operation in step 403 based on the target parameter of the packet 1.

As described above, the operation recorded in the entry of the fifth table includes an operation that needs to be performed when it is determined that optimization needs to be performed on the packet for transmission in the wide area network. In an optional manner, the fifth table records only an operation that needs to be performed when it is determined that optimization needs to be performed on the packet for transmission in the wide area network. After the host 11 queries the fifth table based on the obtained target parameter of the packet 1, if the operation corresponding to the target parameter is not obtained through query, the host 11 determines that optimization does not need to be performed on the packet 1 for transmission in the wide area network, and performs inter-site transmission of the packet 1 between the site 1 and the site 2 in a conventional routing manner, for example, forwards the packet 1 between the site 1 and the site 2 according to a set routing table.

In another optional manner, the operation recorded in the fifth table further includes an operation that needs to be performed when it is determined that optimization does not need to be performed on the packet for transmission in the wide area network. It is assumed that the operation that needs to be performed when it is determined that optimization needs to be performed on the packet for transmission in the wide area network is a third type operation, and the operation that needs to be performed when it is determined that optimization does not need to be performed on the packet for transmission in the wide area network is a fourth type operation. Various types of operations may be defined in a plurality of manners. In this embodiment of this application, the following several manners are used as examples for description.

In a first optional manner, the third type operation may be adding a third tag to a packet that matches an entry in which the operation is located, that is, the third type operation is an adding operation of the third tag, and the third tag indicates to perform one or more operations included in optimization on the matched packet. The fourth type operation may be adding a fourth tag to a packet that matches the entry in which the operation is located, that is, the fourth type operation is an adding operation of the fourth tag, and the fourth tag indicates to perform an operation other than the operation included in the optimization on the matched packet. Optionally, the fourth type operation may be a conventional routing operation, for example, a forwarding operation.

In a second optional manner, the third type operation may be querying a policy table, and all operations recorded in the policy table are operations included in optimization. For example, the policy table may be the policy table in step 405 described below.

The fourth type operation may be querying another policy table or a routing table. All operations recorded in the another policy table are operations other than operations included in optimization, that is, operations in non-optimization.

It should be noted that, in step 404, after the host 11 determines not to perform optimization on the packet 1 in the wide area network, the host 11 may perform inter-site transmission of the packet 1 between the site 1 to which the host 11 belongs and the site 2 in a conventional routing manner, for example, forward the packet 1 between the site 1 and the site 2 according to a set routing table until the packet 1 is forwarded to the host 21 of the site 2. FIG. 4 does not show the process.

Step 405: If optimization needs to be performed on the packet 1 in the wide area network, the host 11 performs optimization on the packet for transmission in the wide area network.

For example, a process in which the host performs optimization on the packet for transmission in the wide area network may include any one of the following two manners, or a combination of the following two manners:

In a first manner, when an optimization condition is met, the host performs one or more of a DPI application identification operation, a firewall operation, an application scheduling operation, an application acceleration operation, and an application encryption operation on the packet:
The optimization condition includes any one or any combination of the following: The protocol used to transmit the packet belongs to a specified protocol set; or the feature of the packet conforms to a specified feature; or a service type corresponding to the packet belongs to a specified service type set; or the information in the application layer protocol field of the packet belongs to a specified information set.

Optimization is performed on a packet whose corresponding service type belongs to the specified service type set, so that service processing efficiency can be improved, thereby improving user experience. For example, the service types included in the specified service type set are usually some service types that have a relatively high requirement on a delay or a relatively high requirement on service quality, for example, a video transmission service, a live broadcast service, and an instant messaging service.

For another condition in the optimization condition, refer to a corresponding definition of the preset condition in step 404. In addition, the optimization condition may be the same as the preset condition, or may be different from the preset condition. This is not limited in this embodiment of this application.

In a second manner, when the optimization condition is met, the host selects the first link as the transmission link of the packet; or when the optimization condition is not met, the host selects the second link as the transmission link of the packet, where the first link is different from the second link.

Optionally, a data transmission rate of the first link is higher than a data transmission rate of the second link, and/or confidentiality of the first link is better than confidentiality of the second link. In this way, for a packet that meets an optimization condition, a link with a high transmission rate is selected, so that a packet transmission delay can be reduced, packet transmission reliability can be improved, and service interruption can be avoided; and a link with high confidentiality can be selected, so that packet reliability can be improved. Therefore, user experience can be improved.

For example, an MPLS-VPN link may be selected for a packet of a service type (for example, a packet of an instant messaging type or a video conference type) that requires a relatively high confidentiality level, and an internet link may be selected for a packet of a service type (for example, a packet of an advertisement type) that requires a relatively low confidentiality level.

Optionally, a process in which the host performs optimization on the packet for transmission in the wide area network may be further implemented by searching a policy table. The host 11 may obtain a policy table in advance, and the policy table is used to indicate the host 11 to perform optimization on the obtained packet. The policy table may be information delivered by the unified controller in advance; or may be information agreed with the unified controller (for example, information set by an administrator during networking); or may be information delivered in real time by the unified controller when detecting that an action of generating a packet exists in the host 11. Optionally, the policy table is used to record optimization respectively corresponding to a plurality of optimization conditions.

It should be noted that, corresponding to different implementations in the second optional manner of step 404, processes in which the host 11 queries the policy table are also different. In this embodiment of this application, the following two manners are used as examples for description.

Corresponding to the first optional manner in the second optional manner of step 404, the host 11 may query the policy table after adding the third tag to the packet 1. Corresponding to the second optional manner in the second optional manner of step 404, the host 11 may directly query the policy table.

It should be noted that, corresponding to different optimization, optimization conditions are different. Therefore, different policy tables may be configured for different optimization, or a same policy table, that is, an overall policy table, may be configured for different optimization.

It is assumed that different policy tables are configured for different optimization. Refer to step 404. In the policy table 1, the optimization condition includes any one or any combination of the following: a protocol used to transmit a packet belongs to a specified protocol set; or a feature of the packet conforms to a specified feature; or a service type corresponding to the packet belongs to a specified service type set; or information in an application layer protocol field of the packet belongs to a specified information set. A corresponding packet performs one or more of a DPI application identification operation, a firewall operation, an application scheduling operation, an application acceleration operation, and an application encryption operation.

In the policy table 2, the optimization condition includes any one or any combination of the following: The protocol used to transmit the packet belongs to a specified protocol set; or the feature of the packet conforms to a specified feature; or a service type corresponding to the packet belongs to a specified service type set; or the information in the application layer protocol field of the packet belongs to a specified information set. Corresponding optimization is an application routing operation, and the first link is selected. Optionally, in the foregoing policy table 2, a corresponding operation when the optimization condition is not met may be further recorded. The corresponding operation is an application routing operation, and the second link is selected.

For example, it is assumed that the foregoing policy Table 2 may be shown in Table 3. The optimization condition is that the service type corresponding to the packet belongs to the specified service type set, and the specified service type set includes a video transmission service, a live broadcast service, and an instant messaging service. Refer to Table 3. If the service type of the packet 1 is a video transmission service, an operation of selecting an MPLS-VPN link may be obtained by querying Table 3, and the host 11 may perform the operation.

**Table 3**

| Service type | Operation |
|---|---|
| Data analysis service | Select an internet link |
| Instant messaging service | Select MPLS-VPN link |
| Video transmission service | Select MPLS-VPN link |
| Live broadcast service | Select MPLS-VPN link |

It should be noted that a form of the foregoing policy table is merely an example for description. During actual implementation of this embodiment of this application, the policy table may alternatively be in another form. This is not limited in this embodiment of this application.

Step 406: The host 11 sends the optimized packet 1 to the wide area network.

In step 406, it is assumed that the transmission path of the packet 1 passes through the wide area network, that is, the site 1 and the site 2 are not a same site. In this embodiment of this application, the host 11 may send the optimized packet 1 to the wide area network in a plurality of manners.

In a first optional manner, the host 11 sends the optimized packet to the wide area network by using a gateway of the site 1 to which the host 11 belongs. Correspondingly, after receiving the optimized packet 1, the gateway sends the optimized packet 1 to the wide area network. In this way, the site 1 to which the host 11 belongs may replace the CPE by using the gateway to implement a packet forwarding function, thereby saving costs.

In a second optional manner, the host 11 sends the optimized packet to the wide area network by using the CPE of the site 1 to which the host 11 belongs. Correspondingly, after receiving the optimized packet 1, the CPE sends the optimized packet 1 to the wide area network. Because the optimization function of the packet in the wide area network originally implemented by the CPE is implemented by the host 11, operations performed by the CPE are effectively reduced. A main function of the CPE changes to packet forwarding, and a function of the CPE is equivalent to that of a gateway. In this way, a packet processing procedure of the CPE is simplified, and calculation overheads of the CPE are reduced, thereby saving costs.

In a third optional manner, the host 11 sends the packet on which optimization has been performed to a wide area network by using a gateway of the host 11. In this way, no CPE needs to be disposed, and no gateway needs to be added outside the host 11 of the site 1, thereby reducing device costs. Especially for a small-sized site, space occupation and server resource occupation may be further reduced.

It should be noted that step 404 is a process of determining whether optimization needs to be performed, and step 405 is a process of determining how to perform optimization. In actual implementation, the two may be combined. In other words, if optimization needs to be performed, optimization is directly performed. For example, the foregoing step 404 and step 405 may be further implemented in another manner. For example, step 404 and step 405 may be replaced with that the host 11 obtains application information of the packet, compares the application information with information in a built-in application library (also referred to as a service library), and performs optimization on a successfully matched packet in a wide area network. For example, the application information includes a service identifier and/or a user identifier, and the service identifier is used to represent a service corresponding to the packet. For example, the service identifier may be an application feature value. The user identifier is used to indicate a user corresponding to the service. Alternatively, step 404 and step 405 may be replaced with that the host 11 queries, based on the target parameter of the packet 1, a sixth table to obtain an operation corresponding to the target parameter, where the sixth table is used to record operations respectively corresponding to a plurality of parameters, the operation is an operation of performing optimization on the packet, and the plurality of parameters may include the target parameter. In this way, an objective of determining and performing optimization can be achieved at the same time by directly looking up the table, thereby saving a processing procedure and improving processing efficiency.

It should be noted that the foregoing steps 402 to 406 may be performed by hardware and/or software in the host 11. In an optional implementation, steps 402 to 406 may be performed by a virtual switch of the host 11. In this way, a wide area network optimization technology is integrated into the virtual switch. In another optional implementation, steps 402 to 406 may be performed by a gateway of the host 11. In this way, the gateway integrates a wide area network optimization technology, and the gateway may be a virtual gateway or a physical gateway (also referred to as a physical gateway). For example, the physical gateway may be implemented by a physical network interface card (that is, an intelligent network interface card). In step 403, that the host 11 determines whether the transmission path of the packet 1 passes through the wide area network may include: determining, by using a physical network interface card in the host 11, whether the transmission path of the packet 1 passes through the wide area network. Correspondingly, in step 404, a process of determining whether to perform optimization on the packet 1 in the wide area network includes: determining, by using the physical network interface card, whether to perform optimization on the packet 1 in the wide area network. Further optionally, another function of the virtual switch in the host 11 may also be integrated into the physical network interface card, that is, no virtual switch is disposed in the host 11, but the physical network interface card implements a function of the original virtual switch. In this way, a structure of the host 11 can be simplified. It should be noted that, in actual implementation of this embodiment of this application, some of the foregoing optimization may be processed by the virtual switch, and the other part may be processed by the gateway (for example, the physical network interface card).

Because the physical gateway, for example, the physical network interface card, is a hardware device, both a processing speed and a computing resource occupied by processing are better than those of the virtual switch. Therefore, execution of the foregoing steps 402 to 406 can be quickly implemented, transmission efficiency and transmission reliability of the packet 1 can be ensured, and packet forwarding performance is improved. Further, the physical gateway performs optimization (for example, application acceleration processing), and may further share load of a central processing unit (CPU, central processing unit) in the host. Therefore, information processing efficiency and reliability in the host are improved.

In addition, when the site 1 is an edge site, an intelligent network interface card is configured on a server node in the edge site, and some or all forwarding functions and features of the virtual switch are offloaded to the physical network interface card, so that consumption of server resources in the edge site can be reduced. Optimization is implemented by using the physical network interface card, and packet forwarding performance can be further improved.

FIG. 6 is a schematic diagram of a structure of an edge site of a cloud computing service system to which an SD-WAN is applied according to a related technology. In FIG. 6, the CPE 170 includes at least one switch. It is assumed in FIG. 6 that the at least one switch includes a switch 171 and a switch 172. The at least one switch is usually a physical switch and is configured to perform optimization on a packet on which optimization needs to be performed in the wide area network. The CPE further includes at least two gateways, and the at least two gateways are in a one-to-one correspondence with at least two communication links supported by a site. For example, the at least two gateways are respectively a virtual gateway 173 and a physical gateway 174, the virtual gateway 173 corresponds to an MPLS-VPN link, and the physical gateway 174 corresponds to an internet link. For a structure of the data center in the related technology, refer to the structure of the edge site. Details are not described in this embodiment of this application.

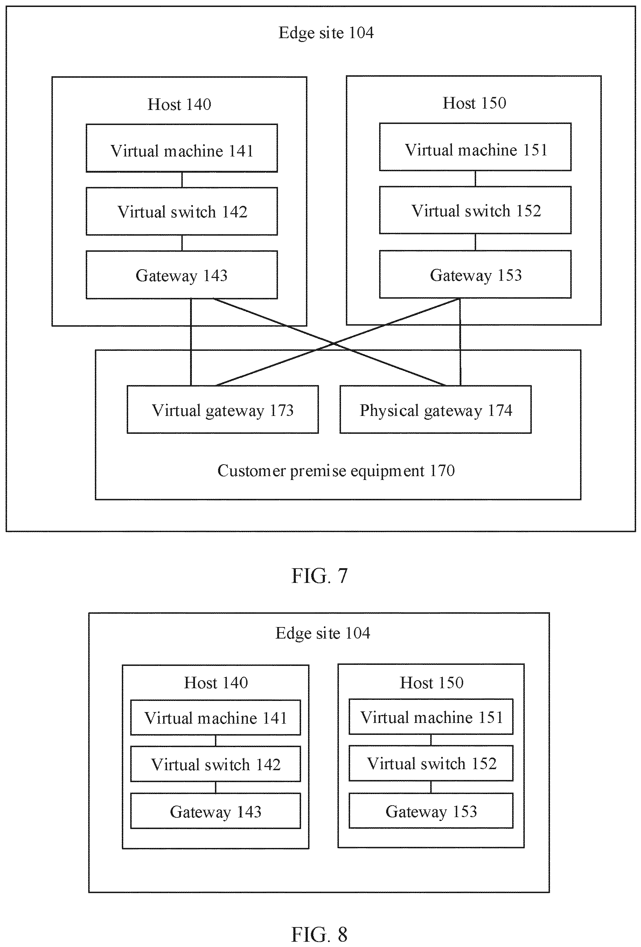

FIG. 7 is a schematic diagram of a structure of an edge site of a cloud computing service system to which an SD-WAN is applied according to an embodiment of this application. In FIG. 7, the CPE 170 includes at least one gateway, and the at least one gateway corresponds to at least one communication link supported by the site. Optionally, the site supports at least two communication links, so that an application routing function of the site can be implemented. Optionally, the CPE 170 includes at least two gateways. A plurality of gateways are disposed, and therefore, gateway redundancy may be implemented, so as to ensure that when one gateway is faulty, another gateway may continue to work, thereby avoiding affecting a normal function of the site. For example, the at least two gateways are in a one-to-one correspondence with the at least two communication links supported by the site. In FIG. 7, the at least two gateways are respectively a virtual gateway 173 and a physical gateway 174, the virtual gateway 173 corresponds to an MPLS-VPN link, and the physical gateway 174 corresponds to an internet link. It should be noted that the at least two gateways may both be physical gateways or virtual gateways. This is not limited in this embodiment of this application.

It can be learned by comparing FIG. 6 and FIG. 7 that, in the site in this embodiment of this application, no network controller is disposed, thereby reducing operation complexity of the site and reducing manufacturing costs of the site. In addition, a function of performing optimization on a packet in a wide area network is integrated into a virtual switch or a gateway inside a host, and a switch does not need to be disposed in CPE to perform optimization in the wide area network. In this way, the CPE usually only needs to include a gateway, and manufacturing is simple and costs are low, thereby effectively reducing manufacturing costs of the site. Especially for a small-sized edge site, space occupation and server resource occupation may be reduced.

Further optionally, a gateway function of the CPE may also be implemented by a gateway of each host in the site. In this way, the CPE may not be disposed any more, so as to reduce device costs. Especially for a small-sized edge site, space occupation and server resource occupation may be further reduced. FIG. 8 is schematic diagram of another structure of an edge site of a cloud computing service system to which an SD-WAN is applied according to an embodiment of this application. One gateway in the host in the edge site 104 may integrate functions of the gateway of the foregoing CPE; or a plurality of gateways in the host in the edge site 104 may separately integrate some functions of the gateway of the CPE, and a sum of the integrated functions of the plurality of gateways is an overall function of the gateway of the CPE. For example, the gateway 143 in FIG. 8 integrates the functions of the gateway of the foregoing CPE. The edge site 104 establishes a communication connection to another site (for example, a data center) by using the gateway 143.

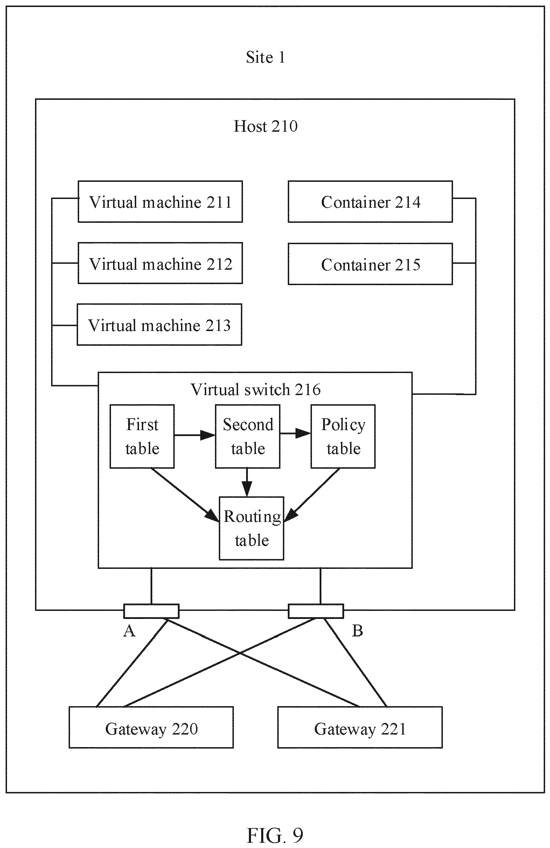

For ease of understanding by a reader, in this embodiment of this application, the structure of the site 1 shown in FIG. 9 is used as an example to describe the packet transmission method in the foregoing embodiment. The site 1 may be an edge site or a data center. In FIG. 9, an example in which the site 1 includes a host 210, a gateway 220, and a gateway 221 is used for description. The site 1 may further include a plurality of other hosts. A quantity of hosts in the site 1 is not limited in this embodiment of this application. The site 1 may further include one gateway or more than three gateways. A quantity of gateways in the site 1 is not limited in this embodiment of this application. For example, the host 210 includes one or more virtual machines and/or one or more containers. In FIG. 9, an example in which the host 210 includes virtual machines 211, 212, and 213, and containers 214 and 215 is used for description. The host 210 further includes a virtual switch 216. Optionally, the host 210 may further include a gateway (not shown in FIG. 9). It is assumed that the foregoing step 202 to step 206 are performed by the virtual switch 216, the virtual switch 216 maintains a third table, a fifth table, a policy table, and a routing table in advance, and one or more of the third table, the fifth table, the policy table, and the routing table are delivered by the unified controller to the site 1. It is assumed that the virtual machine 211 generates a packet 1, and sends the packet 1 to the virtual switch 216. Refer to the third optional manner of step A2. The virtual switch 216 queries the third table based on the obtained destination address of the packet 1, to determine whether the packet 1 passes through the wide area network; and performs an operation obtained by querying based on the obtained destination address, where the operation is querying the fifth table (to determine whether optimization needs to be performed on the packet 1 for transmission in the wide area network) or querying a routing table. Refer to the foregoing step 405. The virtual switch 216 queries the fifth table based on the obtained target parameter of the packet 1, and performs an operation obtained by querying based on the obtained target parameter. The operation is querying a policy table (to determine optimization performed on the packet 1) or querying a routing table. After querying the policy table, the virtual switch 216 still needs to query the routing table. After the virtual switch 216 queries the routing table, if a query result is that the packet 1 needs to be transmitted across the wide area network, the processed packet 1 is sent from a port A or a port B of the host 210 to the corresponding gateway 220 or gateway 221 based on the query result, and the corresponding gateway sends the processed packet 1 to the wide area network by using the communication link.

For a structure of the data center in this embodiment of this application, refer to the structure (the structure in FIG. 7, FIG. 8, or FIG. 9) of the edge site in the embodiments of this application. Details are not described in this embodiment of this application.

It should be noted that, in this embodiment of this application, for structures of one or more entries in the third table, the fifth table, and the policy table, refer to conventional entry structures of some flow tables, for example, any flow entry structure in OpenFlow (Openflow, a network communications protocol) 1.0 to OpenFlow 1.3. This may be compatible with a conventional entry structure, so that at least one of the third table, the fifth table, and the policy table may be carried in the flow table delivered to the host 11, thereby reducing overheads of processing entries by the host 11, and reducing space of a storage table.

Step 407: After receiving the packet 1 in the wide area network, the host 21 processes the packet 1.

Optionally, the host 21 may receive, by using the CPE in the site 2 in which the host 21 is located, the packet 1 whose transmission path passes through the wide area network. After the host 21 receives the packet 1 whose transmission path passes through the wide area network, if the packet 1 is a packet optimized for transmission in the wide area network, the host 21 preprocesses the packet 1. If the packet 1 is not the packet on which optimization is performed for transmission in the wide area network, the packet 1 may be processed in a conventional packet processing manner.

A process in which the host 21 preprocesses the packet may include: The host preprocesses the packet based on received indication information, where the indication information is sent by a source host of the packet, that is, the host 11, to the host 21, and the indication information is used to indicate the optimization performed on the packet.

For example, the preprocessing includes one or more of a firewall operation, an application scheduling operation, an application recovery operation, and an application decryption operation.

For definitions of the firewall operation and the application scheduling operation, refer to the definition in step 404. It should be noted that, in step 407, the firewall operation mainly includes an operation of filtering a packet that is forbidden to be received (that is, the packet cannot be transmitted to a virtual machine or a container inside the site). Optionally, when the indication information indicates that the host 11 has performed the firewall operation on the packet 1, the host 21 may also perform the firewall operation on the received packet 1; and/or when the indication information indicates that the host 11 has performed the application scheduling operation on the packet 1, the host 21 may also perform the application scheduling operation on the received packet 1.

The application restoration operation is an operation corresponding to the application acceleration operation in step 404, and is used to restore a packet obtained after the acceleration processing to a packet obtained before the acceleration processing. Optionally, when the indication information indicates that the host 11 has performed the application acceleration operation on the packet 1, the host 21 may also perform the application recovery operation on the received packet 1. For example, if compression processing is performed on the received packet, the recovery operation includes decompression processing; and if discarding a key frame is performed on the received packet, the recovery operation includes frame insertion processing (that is, inserting a specified key frame into the packet). Quality of a packet transmitted to a virtual machine or a container can be improved by using the application recovery operation, thereby improving user experience.

The packet decryption operation corresponds to the packet encryption operation in step 404. Optionally, when the indication information indicates that the host 11 has performed a packet encryption operation on the packet 1, the host 21 may also perform a packet decryption operation on the received packet 1. The decryption manner corresponds to the encryption manner, for example, a same encryption algorithm is used.

As described above, an operation of preprocessing a same packet may be the same as or may correspond to an operation of optimization. The host may query the correspondence table based on the obtained indication information to obtain the preprocessing operation. For example, the correspondence table records a preprocessing operation corresponding to each of a plurality of operations for optimization. The host determines, based on the obtained indication information, the optimization operation performed on the packet, and queries the correspondence table by using the determined operation, to obtain the preprocessing operation.

For example, in the correspondence table, the firewall operation, the application scheduling operation, the application acceleration operation, and the application encryption operation in the optimization are respectively in a one-to-one correspondence with the firewall operation, the application scheduling operation, the application recovery operation, and the application decryption operation in the preprocessing. The DPI application identification operation and the application routing operation in the optimization operation correspond to a null operation in preprocessing, that is, no preprocessing is performed.

It should be noted that the foregoing preprocessing may further include another type of operation. Details are not described again in this embodiment of this application. Information about various operations included in the foregoing preprocessing may be manually preconfigured in the site 2, or information about various operations included in the preprocessing may be set in the site 2 in a static configuration manner. For example, information about various operations included in the preprocessing is sent by the unified controller to the site 2 in advance by using a configuration instruction, and is stored by the site 2. In this way, a network controller does not need to be separately disposed for the site 2, thereby reducing management costs of the site 2.

Refer to FIG. 2. In the related technology, the instruction information is information that is configured by a user and then that is separately delivered by the SD-WAN controller 105 to CPEs of two sites that need to perform packet transmission across the wide area network.

However, in this embodiment of this application, referring to FIG. 3, in an optional manner, the indication information is directly sent by the host 11 to the host 21. The indication information may be carried in packet 1, or may be sent by using a separate instruction. In another optional manner, the indication information is forwarded by the host 11 to the host 21 by using a unified controller. The indication information is generated by the host 11, and does not need to be configured by the user, thereby effectively reducing user operation complexity and improving user experience.

It should be noted that the foregoing step 407 may be performed by hardware or software in the host 21. In an optional implementation, step 407 may be performed by a virtual switch of the host 21. In this way, the virtual switch integrates a wide area network optimization technology (the foregoing preprocessing may also be considered as belonging to the wide area network optimization technology). In another optional implementation, step 407 may be performed by a gateway of the host 21. In this way, the gateway integrates the wide area network optimization technology, and the gateway may be a virtual gateway or a physical gateway (also referred to as a physical gateway). For example, the physical gateway may be implemented by a physical network interface card (that is, an intelligent network interface card). The process of preprocessing the packet 1 in step 407 includes: preprocessing the packet 1 by using the physical network interface card. Further optionally, another function of the virtual switch in the host 21 may also be integrated into the gateway, that is, no virtual switch is disposed in the host 21, but the gateway implements a function of the original virtual switch. In this way, a structure of the host 21 can be simplified.

When step 407 is performed by the virtual switch of the host 21, after receiving the packet 1, the CPE transmits the packet 1 to the gateway of the host 21. After receiving the packet 1 forwarded by the gateway, the virtual switch preprocesses the packet 1, and transmits the preprocessed packet 1 to the virtual machine (or the container) of the host 21. When step 407 is performed by the gateway of the host 21, after receiving the packet 1, the CPE transmits the packet 1 to the gateway of the host 21. The gateway preprocesses the packet 1, and transmits the processed packet 1 to the virtual machine (or the container) of the host 21 by using the virtual switch.

For example, referring to FIG. 3, it is assumed that the host 11 is a host 140, the host 21 is a host 110, the foregoing steps 402 to 406 are performed by the virtual switch 142, the preprocessing process in the foregoing step 407 is performed by the virtual switch 112, and the packet 1 is transmitted from the virtual machine 141 to the virtual machine 11. After obtaining the packet 1 from the virtual machine 141, the virtual switch 142 detects whether the transmission path of the packet 1 needs to pass through the wide area network, and after determining that the transmission path of the packet 1 passes through the wide area network, determines whether to perform optimization on the packet 1 in the wide area network. When determining that optimization is performed on the packet 1 in the wide area network, the virtual switch 142 performs corresponding optimization, and sends, to the gateway 143, the packet 1 obtained after the optimization is performed; or when determining that optimization is not performed on the packet 1 in the wide area network, the virtual switch 142 sends the packet 1 to the gateway 143. The gateway 143 sends the received packet 1 to the CPE 170, the CPE 170 sends the received packet 1 to the CPE 160, and the CPE 160 transmits the received packet 1 to the virtual switch 112 by using the gateway 113. If the packet 1 is a packet on which optimization is performed for transmission in the wide area network, the virtual switch 112 performs corresponding preprocessing on the packet 1 and sends the packet 1 to the virtual machine 111. If the packet 1 is a packet on which no optimization is performed, the virtual switch 112 does not perform preprocessing on the packet 1, and sends the packet 1 to the virtual machine 111.

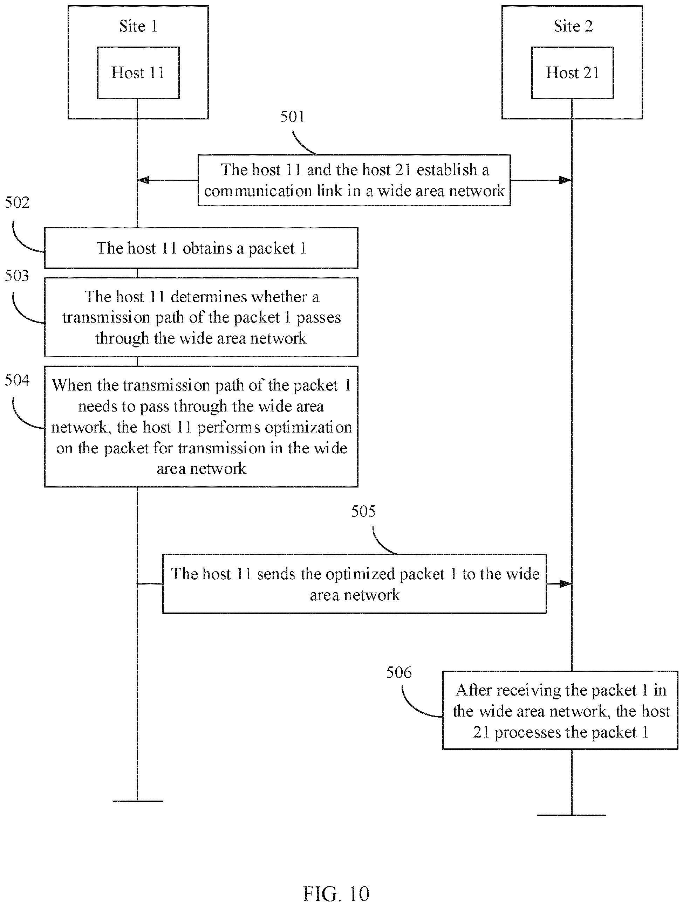

An embodiment of this application further provides a packet transmission method. It is assumed that the method is applied to the cloud computing service system shown in FIG. 3. It is assumed that the host 11 in the site 1 sends the packet 1 to the host 21 in the site 2. The site 1 may be a data center or an edge site, and the site 2 is different from the site 1. As shown in FIG. 10, the method includes the following steps.

Step 501: The host 11 and the host 21 establish a communication link in a wide area network.

Step 502: The host 11 obtains a packet 1. Step 503 is performed.

Step 503: The host 11 determines whether a transmission path of the packet 1 passes through the wide area network. When the transmission path of the packet 1 passes through the wide area network, step 504 is performed.

It should be noted that, if the host 11 detects in step 503 that the transmission path of the packet 1 does not pass through the wide area network, the host 11 processes the packet 1 according to a conventional technology. For example, the packet 1 is transmitted in the site 1 to which the host 11 belongs in a conventional routing manner, and the packet 1 is forwarded in the site 1 according to the set routing table until the packet 1 is forwarded to the host 21 in the site 2. FIG. 10 does not show this process.

Step 504: When the transmission path of the packet 1 needs to pass through the wide area network, the host 11 performs optimization on the packet for transmission in the wide area network.

Step 505: The host 11 sends the optimized packet 1 to the wide area network.

Step 506: After receiving the packet 1 in the wide area network, the host 21 processes the packet 1.

For step 501 to step 506, respectively refer to step 401, step 402, step 403, step 405, step 406, and step 407. This is not limited in this embodiment of this application.

In conclusion, according to the packet transmission method provided in this embodiment of this application, at a transmit end of a packet, when the transmission path of the packet needs to pass through the wide area network, a host (for example, the foregoing host 11) determines whether to perform optimization on the packet 1 in the wide area network. However, the host determines optimization, and the CPE does not need to determine whether to perform optimization on the packet in the wide area network, thereby simplifying a process of processing the packet by the CPE, and reducing calculation overheads of the CPE.

In this way, the CPE only needs to include a gateway or be replaced with a gateway, so that manufacturing is simple and costs are low, thereby effectively reducing manufacturing costs of a site. Especially for a small-sized site, space occupation and server resource occupation may be reduced. Further optionally, a gateway function of the CPE may also be implemented by a gateway of at least one host in the site. In this way, the CPE may not be disposed any more, so as to reduce device costs. Especially for a small-sized site, space occupation and server resource occupation may be further reduced. Refer to FIG. 1 or FIG. 3. The plurality of hosts in the edge site 104 further include a host directly connected to the wide area network 100 (that is, the customer premise equipment 170 may not be disposed). The host is directly connected to the wide area network 100 by using a data transmission line and by using a gateway, so that a virtual machine in the edge site 104 performs data exchange with the wide area network by using the host, and establishes a communication link between each virtual switch and the wide area network 100. Similarly, the plurality of hosts in the data center 101 further include a host directly connected to the wide area network 100 (that is, the customer premise equipment 160 may not be disposed). The host is directly connected to the wide area network 100 by using a data transmission line and by using a gateway, so that a virtual machine in the data center 101 performs data exchange with the wide area network by using the host, and establishes a communication link between each virtual switch and the wide area network 100.

Further, because the host can autonomously determine whether the transmission path of the packet passes through the wide area network, and/or autonomously determine whether to perform optimization on the packet for transmission in the wide area network, compared with that in a related technology, a network controller does not need to indicate the host in the site. Therefore, the network controller does not need to be disposed, thereby further reducing network deployment costs of the SD-WAN.

In a related technology, if a packet needs to be preprocessed, a preprocessing process is also performed by the CPE. However, according to the packet transmission method provided in this embodiment of this application, at a receive end of a packet, a host (for example, the foregoing host 21) preprocesses the packet after receiving the packet whose transmission path passes through the wide area network. The CPE does not need to preprocess the packet, thereby simplifying a packet processing procedure of the CPE and reducing calculation overheads of the CPE. In this way, the CPE only needs to include a gateway or be replaced with a gateway, so that manufacturing is simple and costs are low, thereby effectively reducing manufacturing costs of a site. Optionally, a gateway function of the CPE may also be implemented by a gateway of at least one host in the site. In this way, the CPE may not be disposed any more, so as to reduce device costs.

Further, because the host can independently preprocess the packet for transmission in the wide area network, compared with a related technology, the network controller does not need to indicate the host in the site. Therefore, the network controller does not need to be disposed, thereby further reducing network deployment costs of the SD-WAN.

For a transmit end and the receive end of the packet, the foregoing packet transmission method is used to offload some functions (such as an optimization function or a preprocessing function) of the CPE to the host, for example, a virtual switch or a physical network interface card. For a site, the functions of the original CPE are distributed on each host. An overall structure of the site does not need to be reconstructed or slightly reconstructed. In this way, the entire SD-WAN does not need to be reconstructed or the SD-WAN only needs to be slightly reconstructed, effectively reducing costs.

In addition, the packet transmission method provided in this embodiment of this application may be applied to a packet transmission scenario between different sites, especially in a scenario in which real-time packet transmission needs to be performed between different sites, such as remote office, a video conference, or a remote desktop. This effectively reduces a probability of occurrence of problems such as disconnection and slow access, improves link stability, and greatly meets application timeliness and real-time requirements.

Some values or identifiers in the foregoing embodiments of this application are merely for ease of understanding by readers, and do not limit values or identifiers of corresponding information in actual use. For example, the foregoing source internet protocol IP address is a1, which does not mean that the source internet protocol IP address is a1 in actual use.

It should be noted that a sequence of the steps of the packet transmission method provided in this embodiment of this application may be properly adjusted, and a step may be added or removed based on situations. Any variation readily figured out by a person skilled in the art within the technical scope disclosed in this application shall fall within the protection scope of this application. Details are not described herein.

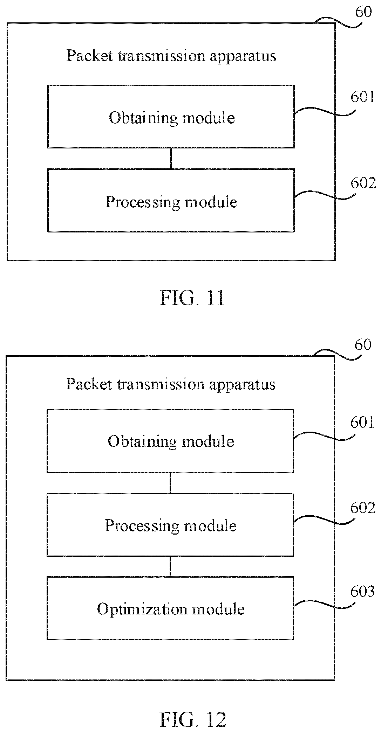

An embodiment of this application provides a packet transmission apparatus 60. As shown in FIG. 11, the apparatus 60 is applied to a host, and the apparatus 60 includes:
an obtaining module 601, configured to obtain a packet; and a processing module 602, configured to: when a transmission path of the packet needs to pass through a wide area network, determine whether to perform optimization on the packet for transmission in the wide area network, or perform, by the host, optimization on the packet for transmission in the wide area network.

In conclusion, according to the packet transmission apparatus provided in this embodiment of this application, when the transmission path of the packet needs to pass through the wide area network, the processing module determines whether to perform optimization on the packet in the wide area network. The CPE does not need to determine whether to perform optimization on the packet in wide area network, thereby simplifying a process of processing the packet by the CPE, and reducing calculation overheads of the CPE.

Optionally, the processing module 602 is configured to determine, based on a target parameter, whether to perform optimization on the packet for transmission in the wide area network, where the target parameter includes any one or any combination of the following: a protocol used to transmit the packet, a feature of the packet, or information in an application layer protocol field of the packet.

Optionally, the information in the application layer protocol field of the packet includes any one or any combination of the following: a source internet protocol IP address; or a source port; or a destination IP address; or a destination port; or a transport layer protocol.

Optionally, the processing module 602 is configured to: when a preset condition is met, determine, by the host, to perform optimization on the packet for transmission in the wide area network; or when the preset condition is not met, determine, by the host, not to perform optimization on the packet for transmission in the wide area network.

The preset condition includes any one or any combination of the following: the protocol used to transmit the packet belongs to a specified protocol set; or the feature of the packet conforms to a specified feature; or the information in the application layer protocol field of the packet belongs to a specified information set.

Optionally, as shown in FIG. 12, the apparatus 60 further includes an optimization module 603, configured to: when an optimization condition is met, perform, by the host, one or more of a DPI application identification operation, a firewall operation, an application scheduling operation, an application acceleration operation, and an application encryption operation on the packet; and/or when the optimization condition is met, select, by the host, a first link as a transmission link of the packet, or when the optimization condition is not met, select, by the host, a second link as a transmission link of the packet, where the first link is different from the second link.

The optimization condition includes any one or any combination of the following: The protocol used to transmit the packet belongs to a specified protocol set; or the feature of the packet conforms to a specified feature; or a service type corresponding to the packet belongs to a specified service type set; or the information in the application layer protocol field of the packet belongs to a specified information set.

Optionally, the processing module 602 is further configured to determine whether the transmission path of the packet passes through the wide area network.

Optionally, the processing module 602 is further configured to determine, by the host based on the destination address of the packet, whether the transmission path of the packet passes through the wide area network.

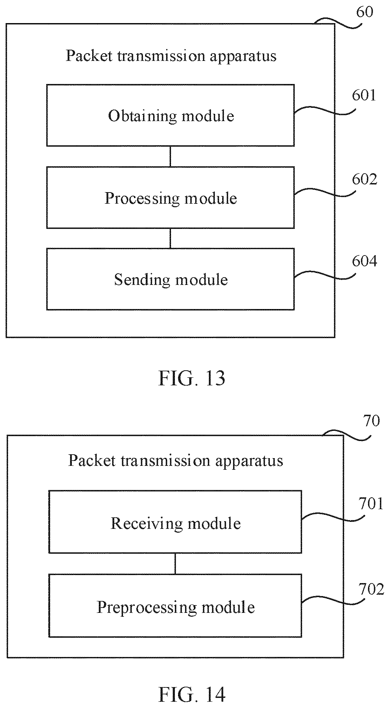

Optionally, as shown in FIG. 13, the apparatus 60 further includes: a sending module 604, configured to: send the packet on which optimization has been performed to a wide area network by using a gateway in a site to which the host belongs or a customer premise equipment; or send the packet on which optimization has been performed to a wide area network by using a gateway of the host.

Optionally, the apparatus 60 is a virtual switch or a physical network interface card.

An embodiment of this application provides a packet transmission apparatus 70. As shown in FIG. 14, the apparatus 70 is applied to a host. The apparatus 70 includes: a receiving module 701, configured to receive a packet transmitted through a wide area network, where the packet is a packet optimized for transmission in the wide area network; and a preprocessing module 702, configured to preprocess the packet.

According to the packet transmission method provided in this embodiment of this application, at a receive end of the packet, the preprocessing module preprocesses the packet after the receiving module receives the packet whose transmission path passes through the wide area network. The CPE does not need to preprocess the packet, thereby simplifying a packet processing procedure of the CPE and reducing calculation overheads of the CPE. In this way, the CPE only needs to include a gateway or be replaced with a gateway, so that manufacturing is simple and costs are low, thereby effectively reducing manufacturing costs of a site.

Optionally, the preprocessing module 702 is configured to preprocess the packet based on received indication information, where the indication information is sent by a source host of the packet to the host, and the indication information is used to indicate the optimization performed on the packet.

Optionally, the indication information is forwarded by the source host of the packet to the host by using a unified controller.

Optionally, the preprocessing includes one or more of a firewall operation, an application scheduling operation, an application restoration operation, or an application decryption operation.

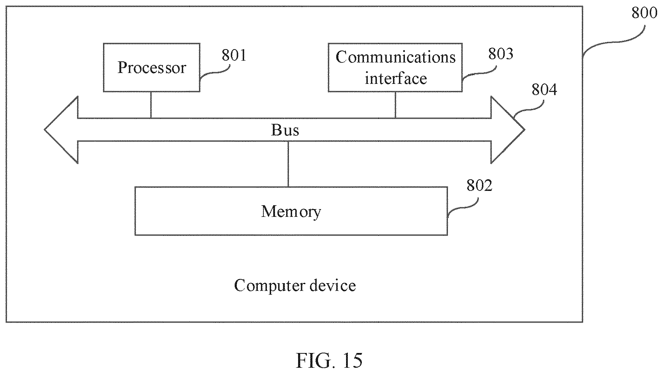

Optionally, FIG. 15 schematically provides a possible basic hardware architecture of a computer device according to an embodiment of this application. The computer device may be a host of a data center or an edge site.

Refer to FIG. 15. The computer device 800 includes a processor 801, a memory 802, a communications interface 803, and a bus 804.

In the computer device 800, there may be one or more processors 801. FIG. 15 shows only one of the processors 801. Optionally, the processor 801 may be a central processing unit (central processing unit, CPU). If the computer device 800 has a plurality of processors 801, the plurality of processors 801 may be of different types or may be of a same type. Optionally, the plurality of processors 801 in the computer device 800 may be further integrated into a multi-core processor.

The memory 802 stores a computer instruction and data. The memory 802 may store a computer instruction and data that are required for implementing the packet transmission method provided in this application. For example, the memory 802 stores instructions used to implement steps of the packet transmission method. The memory 802 may be any one or any combination of the following storage media: a nonvolatile memory (for example, a read-only memory (ROM), a solid-state drive (SSD), a hard disk drive (HDD), or an optical disc), and a volatile memory.

The communications interface 803 may be any one or any combination of components having a network access function such as a network interface (for example, an Ethernet interface) and a wireless network interface card.

The communications interface 803 is configured to perform data communication between the computer device 800 and another computer device or a terminal.

The bus 804 may connect the processor 801 to the memory 802 and the communications interface 803. In this way, through the bus 804, the processor 801 may access the memory 802, and may further exchange data with the another computer device or terminal through the communications interface 803.

In this application, the computer device 800 executes the computer instruction in the memory 802, so that the computer device 800 implements the packet transmission method provided in this application.

In an example embodiment, a non-transitory computer-readable storage medium including instructions is further provided, for example, a memory including instructions. The instructions may be executed by a processor of a server to complete the packet transmission method shown in the embodiments of this application. For example, the non-transitory computer-readable storage medium may be a ROM, a random access memory (RAM), a CD-ROM, a magnetic tape, a floppy disk, or an optical data storage device.

An embodiment of this application provides a network interface card, including:
a processor and a memory.

The memory is configured to store computer instructions.

The processor is configured to execute the computer instructions stored in the memory, so that the network interface card performs the packet transmission method provided in the foregoing embodiments of this application.

An embodiment of this application provides a packet transmission system, including at least two sites, where the site includes one or more hosts, and the hosts of the at least two sites include any one or any combination of the following:
the packet transmission apparatus 60 shown in any one of FIG. 11 and FIG. 12; or the packet transmission apparatus 70 shown in FIG. 13.

In an optional manner, a host of one of the at least two sites includes the packet transmission apparatus 60 shown in any one of FIG. 11 and FIG. 12, and a host of the other site includes a conventional host.

In another optional manner, a host of one of the at least two sites includes the packet transmission apparatus 70 shown in FIG. 13, and a host of the other site includes a conventional host.

In still another optional manner, a host of one of the at least two sites includes the packet transmission apparatus 60 shown in any one of FIG. 11 and FIG. 12, and a host of another site includes the packet transmission apparatus 70 shown in FIG. 13.

Optionally, the file transfer system further includes a unified controller.

Optionally, for a structure of the file transfer system, refer to the structure of the file transfer system in the schematic diagram of the application scenario shown in FIG. 1 or FIG. 3.

Optionally, the at least two sites may further include the site shown in any one of FIG. 7 to FIG. 9.

All or some of the foregoing embodiments may be implemented by using software, hardware, firmware, or any combination thereof. When the software is used to implement embodiments, all or some of embodiments may be implemented in a form of a computer program product. The computer program product includes one or more computer instructions. When the computer program instructions are loaded and executed on the computer, the procedure or functions according to embodiments of this application are all or partially generated. The computer may be a general-purpose computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line) or wireless (for example, infrared, radio, or microwave) manner. The computer-readable storage medium may be any usable medium accessible by a computer, or a data storage device, such as a server or a data center, integrating one or more usable media. The usable medium may be a magnetic medium (for example, a floppy disk, a hard disk, or a magnetic tape), an optical medium, a semiconductor medium (for example, a solid-state drive), or the like.

In this application, the terms "first", "second", "third" and the like are merely used for description, but cannot be understood as an indication or implication of relative importance. The term "at least one" means one or more, and the term "a plurality of' means two or more, unless otherwise expressly limited. A refers to B, which means that A is the same as B or A is a simple variant of B.

It should be noted that when the packet transmission apparatus provided in the foregoing embodiment performs the packet transmission method, division of the foregoing functional modules is merely used as an example for description. In actual application, the foregoing functions may be allocated to different functional modules for implementation according to a requirement, that is, an internal structure of the device is divided into different functional modules, to implement all or some of the functions described above. In addition, the packet transmission apparatus provided in the foregoing embodiment pertains to a same concept as the packet transmission method embodiment. For a specific implementation process of the packet transmission apparatus, refer to the method embodiment. Details are not described herein again.

A person of ordinary skill in the art may understand that all or some of the steps of the embodiments may be implemented by hardware or a program instructing related hardware. The program may be stored in a computer-readable storage medium. The storage medium may be a read-only memory, a magnetic disk, an optical disc, or the like.

The foregoing descriptions are merely example embodiments of this application, but are not intended to limit this application. Any modification, equivalent replacement, or improvement made without departing from the spirit and principle of this application should fall within the protection scope of this application.

## Claims

1. A packet transmission method, wherein the method comprises:
obtaining, by a host, a packet; and
when a transmission path of the packet needs to pass through a wide area network, determining, by the host, whether to perform optimization on the packet for transmission in the wide area network, or performing, by the host, optimization on the packet for transmission in the wide area network.

2. The method according to claim 1, wherein the determining, by the host, whether to perform optimization on the packet for transmission in the wide area network comprises:
determining, by the host based on a target parameter, whether to perform optimization on the packet for transmission in the wide area network, wherein
the target parameter comprises any one or any combination of the following:
a protocol used to transmit the packet; or
a feature of the packet; or
information in an application layer protocol field of the packet.

3. The method according to claim 2, wherein the information in the application layer protocol field of the packet comprises any one or any combination of the following:
a source internet protocol IP address; or
a source port; or
a destination IP address; or
a destination port; or
a transport layer protocol.

4. The method according to any one of claims 1 to 3, wherein the determining, by the host, whether to perform optimization on the packet for transmission in the wide area network comprises:
when a preset condition is met, determining, by the host, to perform optimization on the packet for transmission in the wide area network; or
when a preset condition is not met, determining, by the host, not to perform optimization on the packet for transmission in the wide area network, wherein
the preset condition comprises any one or any combination of the following:
the protocol used to transmit the packet belongs to a specified protocol set; or
the feature of the packet conforms to a specified feature; or
the information in the application layer protocol field of the packet belongs to a specified information set.

5. The method according to any one of claims 1 to 4, wherein the performing, by the host, optimization on the packet for transmission in the wide area network comprises:
when an optimization condition is met, performing, by the host, one or more of a DPI application identification operation, a firewall operation, an application scheduling operation, an application acceleration operation, and an application encryption operation on the packet; and/or
when the optimization condition is met, selecting, by the host, a first link as a transmission link of the packet, or when the optimization condition is not met, selecting, by the host, a second link as a transmission link of the packet, wherein the first link is different from the second link, wherein
the optimization condition comprises any one or any combination of the following:
the protocol used to transmit the packet belongs to a specified protocol set; or
the feature of the packet conforms to a specified feature; or
a service type corresponding to the packet belongs to a specified service type set; or
the information in the application layer protocol field of the packet belongs to a specified information set.

6. The method according to any one of claims 1 to 5, wherein the method further comprises:
determining, by the host, whether the transmission path of the packet passes through the wide area network.

7. The method according to claim 6, wherein the determining, by the host, whether the transmission path of the packet passes through the wide area network comprises:
determining, by the host based on a destination address of the packet, whether the transmission path of the packet passes through the wide area network.

8. The method according to any one of claims 1 to 7, wherein the method further comprises:
sending, by the host, the optimized packet to the wide area network by using a gateway or a customer premise equipment of a site to which the host belongs; or
sending, by the host, the optimized packet to the wide area network by using a gateway of the host.

9. A packet transmission method, wherein the method comprises:
receiving, by a host, a packet transmitted through a wide area network, wherein the packet is a packet optimized for transmission in the wide area network; and
preprocessing, by the host, the packet.

10. The method according to claim 9, wherein the preprocessing, by the host, the packet comprises:
preprocessing, by the host, the packet based on received indication information, wherein
the indication information is sent by a source host of the packet to the host, and the indication information is used to indicate the optimization performed on the packet.

11. The method according to claim 10, wherein the indication information is forwarded by the source host of the packet to the host by using a unified controller.

12. The method according to any one of claims 9 to 11, wherein the preprocessing comprises one or more of a firewall operation, an application scheduling operation, an application recovery operation, and an application decryption operation.

13. A packet transmission apparatus, wherein the apparatus is applied to a host, and the apparatus comprises:
an obtaining module, configured to obtain a packet; and
a determining module, configured to: when a transmission path of the packet needs to pass through a wide area network, determine whether to perform optimization on the packet for transmission in the wide area network, or perform, by the host, optimization on the packet for transmission in the wide area network.

14. The apparatus according to claim 13, wherein the determining module is configured to:
determine, based on a target parameter, whether to perform optimization on the packet for transmission in the wide area network, wherein
the target parameter comprises any one or any combination of the following:
a protocol used to transmit the packet; or a feature of the packet; or information in an application layer protocol field of the packet.

15. The apparatus according to claim 14, wherein the information in the application layer protocol field of the packet comprises any one or any combination of the following:
a source internet protocol IP address; or a source port; or a destination IP address; or a destination port; or a transport layer protocol.

16. The apparatus according to any one of claims 13 to 15, wherein the determining module is configured to:
when a preset condition is met, determine, by the host, to perform optimization on the packet for transmission in the wide area network; or
when a preset condition is not met, determine, by the host, not to perform optimization on the packet for transmission in the wide area network, wherein
the preset condition comprises any one or any combination of the following:
the protocol used to transmit the packet belongs to a specified protocol set; or
the feature of the packet conforms to a specified feature; or
the information in the application layer protocol field of the packet belongs to a specified information set.

17. The apparatus according to any one of claims 13 to 16, wherein the apparatus further comprises an optimization module, configured to:
when an optimization condition is met, perform, by the host, one or more of a DPI application identification operation, a firewall operation, an application scheduling operation, an application acceleration operation, and an application encryption operation on the packet; and/or
when the optimization condition is met, select, by the host, a first link as a transmission link of the packet, or when the optimization condition is not met, select, by the host, a second link as a transmission link of the packet, wherein the first link is different from the second link, wherein
the optimization condition comprises any one or any combination of the following:
the protocol used to transmit the packet belongs to a specified protocol set; or
the feature of the packet conforms to a specified feature; or
a service type corresponding to the packet belongs to a specified service type set; or
the information in the application layer protocol field of the packet belongs to a specified information set.

18. The apparatus according to any one of claims 13 to 17, wherein the determining module is further configured to determine whether the transmission path of the packet passes through the wide area network.

19. The apparatus according to claim 18, wherein the determining module is further configured to:
determine, by the host based on a destination address of the packet, whether the transmission path of the packet passes through the wide area network.

20. The apparatus according to any one of claims 13 to 19, wherein the apparatus further comprises a sending module, configured to:
send the optimized packet to the wide area network by using a gateway or a customer premise equipment of a site to which the host belongs; or
send the optimized packet to the wide area network by using a gateway of the host.

21. The apparatus according to any one of claims 13 to 20, wherein the apparatus is a virtual switch or a physical network interface card.

22. A packet transmission apparatus, wherein the apparatus is applied to a host, and the apparatus comprises:
a receiving module, configured to receive a packet transmitted through a wide area network, wherein the packet is a packet optimized for transmission in the wide area network; and
a preprocessing module, configured to preprocess the packet.

23. The apparatus according to claim 22, wherein the preprocessing module is configured to:
preprocess the packet based on received indication information, wherein
the indication information is sent by a source host of the packet to the host, and the indication information is used to indicate the optimization performed on the packet.

24. The apparatus according to claim 23, wherein the indication information is forwarded by the source host of the packet to the host by using a unified controller.

25. The apparatus according to any one of claims 22 to 24, wherein the preprocessing comprises one or more of a firewall operation, an application scheduling operation, an application recovery operation, and an application decryption operation.

26. A computer device, comprising:
a processor and a memory, wherein
the memory is configured to store computer instructions; and
the processor is configured to execute the computer instructions stored in the memory, so that the computer device performs the packet transmission method according to any one of claims 1 to 8.

27. A computer-readable storage medium, wherein the computer-readable storage medium comprises computer instructions, and the computer instructions instruct a computer device to perform the packet transmission method according to any one of claims 1 to 8.

28. A packet transmission system, comprising at least two sites, wherein the sites comprise one or more hosts, and the hosts of the at least two sites comprise the packet transmission apparatus according to any one of claims 13 to 21.

29. A computer device, comprising:
a processor and a memory, wherein
the memory is configured to store computer instructions; and
the processor is configured to execute the computer instructions stored in the memory, so that the computer device performs the packet transmission method according to any one of claims 9 to 12.

30. A computer-readable storage medium, wherein the computer-readable storage medium comprises computer instructions, and the computer instructions instruct a computer device to perform the packet transmission method according to any one of 9 to 12.

31. A packet transmission system, comprising at least two sites, wherein the sites comprise one or more hosts, and the hosts of the at least two sites comprise the packet transmission apparatus according to any one of claims 22 to 25.
